# EUROPEAN PATENT APPLICATION

(11) **EP 2 840 279 A1**
(43) Date of publication of application: **25.02.2015**
(21) Application number: 13778816.2
(22) Date of filing: 19.04.2013
(51) Int. Cl.: F16D 55/14, F16D 65/14, F16D 65/22

(54) **FRICTION BRAKE DEVICE**

(30) Priority: 20.04.2012 JP 2012097111
(71) Applicant: Toyota Jidosha Kabushiki Kaisha, Toyota-shi, Aichi 471-8571 (JP)
(72) Inventor: ISONO, Hiroshi, Toyota-shi, Aichi 471-8571 (JP)
(74) Representative: Winter, Brandl, Fürniss, Hübner, Röss, Kaiser, Polte - Partnerschaft mbB
(86) International application number: PCT/JP2013/061681
(87) International publication number: WO 2013/157644

(57) **Abstract**

A friction brake device 10 having: first and second pressing members which press frictional engagement members 14A, 16A against a pair of friction surfaces 20S, 22S, respectively, that are rotatable around a rotation axis 18 as mutually opposed; a force transmission mechanism 46 which transmits rotational torque between the pressing members, transforms the rotational torque into the force separating the pressing members from each other along the rotation axis through a wedge action, and transmits reaction force of the pressing force between the pressing members; a pressing force control mechanism 34 which control the force with which at least one of the pressing members presses the associated frictional engagement member against the associated friction surface; and a rotational torque bearing member 28 which bears the rotational torque transmitted from one of the pressing members to the other of the pressing members by way of the other pressing member.

## Description

### TECHNICAL FIELD

The present invention relates to a friction brake device and, more particularly, to a friction brake device which generates frictional force by pressing a friction member against a brake rotor.

### BACKGROUND ART

In the field of friction brake devices, a configuration has already known where pressing force for pressing a friction member against a brake rotor is increased by means of pressing a friction member against a brake rotor and generating a wedge action through the use of a rotational torque which the friction member receives from the brake rotor. For example, in the under-mentioned patent citation 1, a friction brake device is described which has a self-force-increasing mechanism that generates wedge action.

According to such a brake device, as compared to a brake device in which braking force is not increased by a wedge action, braking force can be increased without increasing the pressing force with which the friction members are pressed against the brake rotor by pressing devices.

### CITAION LIST

Patent Literature 1: Japanese Patent Application Laid-open Publication No. 2004-225902

### SUMMARY OF INVENTION

### TECHNICAL PROBLEM

However, in such a conventional friction brake device which generates wedge action as described in the above-mentioned patent citation 1, since a member for supporting the reaction force of pressing force is provided separately from the pressing device, the brake device cannot help being complicated in structure. Besides, as the increase of the pressing force by the pressing device and the wedge action is achieved on only one side of the brake rotor, braking force cannot adequately be increased.

The present invention was made in view of the above-described drawbacks in conventional friction brake device generating wedge action. A primary object of the present invention is to adequately increase braking force through the use of wedge action while preventing the structure of the brake device from being complicated.

### SOLUTION TO PROBLEM AND ADVANTAGEOUS EFFECTS

The present invention provides a friction brake device comprising: first and second mutually opposed friction surfaces which are rotatable around a rotation axis and extend perpendicularly to the rotation axis; first and second pressing members which press first and second frictional engagement members against the first and second friction surfaces, respectively, and are supported so that the pressing members can rotate around the rotation axis and can relatively displace along the rotation axis; a force transmission mechanism which transmits rotational torque acting around the rotation axis between the first and second pressing members; transforms the rotational torque into the force acting in the direction of separating the first and second pressing members from each other along the rotation axis through the use of a wedge action generated by means of the first and second pressing members being relatively rotated around the rotation axis; and mutually transmits reaction force generated by means of the friction surfaces being pressed by the frictional engagement members between the first and second pressing members; a pressing force control mechanism which control the force with which at least one of the first and second pressing members presses the associated frictional engagement member against the associated friction surface; and a rotational torque bearing member which is supported so as not to rotate around the rotation axis and bears the rotational torque which is transmitted from one of the first and second pressing members to the other of the first and second pressing members by way of the other pressing member.

According to the configuration, when pressing force is controlled by the pressing force control mechanism and one of the first and second pressing members presses the associated frictional engagement member against the associated friction surface in a situation where the first and second friction surfaces rotate around the rotation axis, they frictionally engage with each other. As a result, the one of the pressing members receives rotational torque acting around the rotation axis from the associated friction surface by way of the associated frictional engagement member and rotates around the rotation axis relative to the other pressing member, resulting in that force acting in the direction of separating the first and second pressing members from each other is generated by the force transmission mechanism. The latter force is proportional to the pressing force which is controlled by the pressing force control mechanism.

Thus, according to the above-described configuration, by controlling the pressing force by means of the pressing force control mechanism, the force acting in the direction of separating the first and second pressing members from each other can be controlled, which enables to control the pressing force that presses the first and second frictional engagement members against the first and second friction surfaces, respectively, to thereby control the braking force. It is to be noted that as the force acting in a direction of separating the first and second pressing members from each other is generated by the transformation of the rotational torque through the use of the wedge action, the braking force can be increased as compared to where the wedge action is not utilized.

The first and second pressing members and the first and second frictional engagement members are disposed between the first and second mutually opposed friction surfaces, and the first and second frictional engagement members are pressed against the first and second friction surfaces, respectively, by the force generated by means of the transformation by the force transmission mechanism. The reaction force of each pressing force is transmitted to the other pressing member by the force transmission mechanism.

Consequently, according to the above-mentioned configuration, as compared to where the generation of pressing force and the bearing of the reaction force of the pressing force are achieved by a separate member, the structure of the brake device can be simplified. In addition, as compared to where a frictional engagement member is pressed against only one friction surface, the braking force can be increased. Therefore, it is possible to adequately increase the braking force through the use of the wedge action while preventing the structure of the brake device from being unduly complicated.

The above-mentioned configuration may be such that: when the force which is controlled by the pressing force control mechanism is 0, the first and second pressing members are positioned at normal positions where they do not press the first and second frictional engagement members against the first and second friction surfaces, respectively, and the force transmission mechanism does not generate any force which acts in the direction of separating the first and second pressing members from each other.

According to the configuration, when the force which is controlled by the pressing force control mechanism is 0, the first and second frictional engagement members are not pressed against the first and second friction surfaces, respectively, which enables to effectively prevent unnecessary braking force from being generated.

The above-mentioned configuration may be such that: as the relative rotational displacement of the first and second pressing members from the normal positions increases, the force transmission mechanism increases the force which acts in the direction of separating the first and second pressing members from each other.

According to the configuration, as the pressing force increases which is controlled by the pressing force control mechanism and the rotational torque increases which is transmitted by the force transmission mechanism between the two pressing members, the force can be increased which acts in the direction of separating the two pressing members from each other.

The above-mentioned configuration may be such that: the force transmission mechanism has first and second opposed surfaces which are provided on the first and second pressing members, respectively, and opposes to each other in the direction along the rotation axis; the first and second opposed surfaces have inclined areas which incline in the same direction relative to a virtual plane perpendicular to the rotation axis; and the force transmission mechanism transmits the rotational torque in the circumferential direction around the rotation axis by the cooperation of the inclined areas of the first and second opposed surfaces, and transforms the rotational torque into the force acting in the direction which is parallel to the rotation axis and separating the first and second pressing members from each other.

According to the configuration, by means of the force transmission between the first and second opposed surfaces, the rotational torque can effectively be transmitted in the circumferential direction around the rotation axis, and the rotational torque can effectively be transformed into the force separating the first and second pressing members from each other.

The above-mentioned configuration may be such that: when the first and second pressing members are positioned at the normal positions, the distance along the rotation axis between the surface of the first pressing member on the side of the first frictional engagement member and the surface of the second pressing member on the side of the second frictional engagement member assumes a minimum value.

According to the configuration, when the first and second pressing members are positioned at the normal positions, the distance along the rotation axis between the surface of the first pressing member on the side of the first frictional engagement member and the surface of the second pressing member on the side of the second frictional engagement member assumes a minimum value. Consequently, when the force which is controlled by the pressing force control mechanism is 0, the first and second pressing members can effectively be prevented from pressing the first and second frictional engagement members, respectively, against the first and second friction surfaces.

The above-mentioned configuration may be such that: the first and second opposed surfaces have areas where the inclination relative to the virtual plane is 0, and the first and second opposed surfaces on both sides of the areas where the inclination relative to the virtual plane is 0 are inclined in the directions opposite to each other relative to the virtual plane.

According to the configuration, in either case where the first and second opposed surfaces rotate around the rotation axis in one or the other direction, the transmission of the rotational torque by the force transmission mechanism, the generation of the force separating the two pressing members from each other and the transmission of the reaction force of the pressing force between the two pressing members can preferably be effected.

The above-mentioned configuration may be such that: the inclination of the inclined area of at least one of the first and second opposed surfaces relative to the virtual plane decreases with the distances from the associated area where the inclination relative to the virtual plane is 0.

According to the configuration, as the relative rotational displacement caused by the rotational torque increases, the rate of increase in the force separating the first and second pressing members from each other can be increased, which enables to make the braking property progressive.

The above-mentioned configuration may be such that: the first pressing member is supported by a stationary member so that it can rotate around the rotation axis and can displace along the rotation axis; the second pressing member is supported by the stationary member so that it cannot rotate around the rotation axis but can displace along the rotation axis; and the pressing force control mechanism controls the force with which at least the first pressing member presses the first frictional engagement member against the first friction surface.

According to the configuration, as the second pressing member does not rotate around the rotation axis, the structure of the brake device can be simplified as compared to where the second pressing member also rotates around the rotation axis.

The above-mentioned configuration may be such that: the first and second pressing members includes first and second wedge members having the first and second opposed surfaces, respectively, which opposes to each other in the direction along the rotation axis, and first and second main bodies which support the first and second wedge members, respectively, so that they can displace along the rotation axis; the first and second opposed surfaces have inclined areas which incline in the same direction relative to a virtual plane perpendicular to the rotation axis; the force transmission mechanism transmits the rotational torque in the circumferential direction around the rotation axis by the cooperation of the inclined areas of the first and second opposed surfaces, and transforms the rotational torque into the force acting in the direction which is parallel to the rotation axis and separating the first and second pressing members from each other; and the first and second wedge members press the first and second frictional engagement members against the first and second friction surfaces, respectively.

According to the configuration, by means of the cooperation of the inlined areas of the first and second opposed surfaces, the rotational torque can effectively be transmitted in the circumferential direction around the rotation axis and the rotational torque can effectively be transformed into the force acting in the direction which is parallel to the rotation axis and separating the first and second pressing members from each other. In addition, the first and second frictional engagement members can be pressed against the first and second friction surfaces by the first and second wedge members, respectively.

The above-mentioned configuration may be such that: the first main body is supported by a stationary member so that it can rotate around the rotation axis and can displace along the rotation axis; the second main body is supported by the stationary member so that it cannot rotate around the rotation axis but can displace along the rotation axis; and the pressing force control mechanism controls the force with which at least the first wedge member presses the first frictional engagement member against the first friction surface.

According to the configuration, as the second main body does not rotate around the rotation axis, the structure of the brake device can be simplified as compared to where the second main body also rotates around the rotation axis.

The above-mentioned configuration may be such that: the force transmission mechanism includes first and second wedge members having the first and second opposed surfaces, respectively, which opposes to each other in the direction along the rotation axis; the first and second pressing members have portions positioned between the first and second friction surfaces and the first and second wedge members, respectively, and are supported so that they can displace along the rotation axis together with the first and second wedge members, respectively; the first and second opposed surfaces have inclined areas which incline in the same direction relative to a virtual plane perpendicular to the rotation axis; the force transmission mechanism transmits the rotational torque in the circumferential direction around the rotation axis by the cooperation of the inclined areas of the first and second opposed surfaces, and transforms the rotational torque into the force acting in the direction which is parallel to the rotation axis and separating the first and second wedge members from each other; and the first and second wedge members press the first and second frictional engagement members against the first and second friction surfaces by way of the first and second pressing members, respectively.

According to the configuration, by means of the cooperation of the inlined areas of the first and second opposed surfaces, the rotational torque can effectively be transmitted in the circumferential direction around the rotation axis and the rotational torque can effectively be transformed into the force acting in the direction which is parallel to the rotation axis and separating the first and second pressing members from each other. In addition, the first and second frictional engagement members can be pressed against the first and second friction surfaces by way of the first and second pressing members by the first and second wedge members, respectively.

The above-mentioned configuration may be such that: the first main body is supported by a stationary member so that it can rotate around the rotation axis and can displace along the rotation axis; the second main body is supported by the stationary member so that it can displace along the rotation axis; at least one of the second main body and the second wedge member is supported by the stationary member so that it cannot rotate around the rotation axis; when the first main body is rotated around the rotation axis, the first wedge member is rotationally driven around the rotation axis by the first main body; and the pressing force control mechanism controls the force with which at least the first main body presses the first frictional engagement member against the first friction surface.

According to the configuration, as at least one of the second main body and the second wedge member does not rotate around the rotation axis, the structure of the brake device can be simplified as compared to where the second main body and the second wedge member rotate around the rotation axis.

The above-mentioned configuration may be such that: the rotational torque bearing member is the stationary member.

According to the configuration, the structure of the brake device can be simplified as compared to where the rotational torque bearing member is another member other than stationary member.

The above-mentioned configuration may be such that: a plurality of the pressing force control mechanisms are arranged around the rotation as spaced apart from each other.

According to the configuration, the transmission of the rotational torque by the force transmission mechanism, the generation of the force separating the two pressing members from each other and the transmission of the reaction force of the pressing force between the two pressing members can preferably be effected at a plurality of positions around the rotation axis. Consequently, as compared to where only one force transmission mechanism is provided, the transmission of the rotational torque by the force transmission mechanism, the generation of the force separating the two pressing members from each other and the transmission of the reaction force of the pressing force between the two pressing members can more preferably be effected.

The above-mentioned configuration may be such that: a plurality of the first and second wedge members are arranged around the rotation axis as spaced apart from each other, respectively.

According to the configuration, the transmission of the rotational torque by the force transmission mechanism, the generation of the force separating the two pressing members from each other and the transmission of the reaction force of the pressing force between the two pressing members can preferably be effected at a plurality of positions around the rotation axis. Consequently, as compared to where only one pair of first and second wedge members are provided, the transmission of the rotational torque by the force transmission mechanism, the generation of the force separating the two pressing members from each other and the transmission of the reaction force of the pressing force between the two pressing members can more preferably be effected.

### BRIEF DESCRIPTION OF THE DRAWINGS

Fig. 1 is a partial sectional view showing a section of a first embodiment of the friction brake device according to the present invention which is structured as an electromagnetic brake device for a vehicle, as cut along a section passing through a rotation axis.
Fig. 2 is a partial front view showing the first embodiment as viewed from right side in Fig. 1.
Fig. 3 is a partial sectional view which is along III-III in Fig. 2, showing a force transmission mechanism with respect to a situation where a first and second pressing members are in their normal positions.
Fig. 4 is a partial sectional view showing the force transmission mechanism with respect to a situation where the first and second pressing members are relatively displaced.
Fig. 5 is a partial sectional view showing a section of a second embodiment of the friction brake device according to the present invention which is structured as an electromagnetic brake device for a vehicle, as cut along a section passing through a rotation axis.
Fig. 6 is a partial front view showing the second embodiment as viewed from right side in Fig. 5.
Fig. 7 is a partial sectional view showing a section of a third embodiment of the friction brake device according to the present invention which is structured as a hydraulic brake device for a vehicle, as cut along a section passing through a rotation axis.
Fig. 8 is a partial front view showing the third embodiment as viewed from right side in Fig. 7.
Fig. 9 is a partial sectional view showing a section of a fourth embodiment of the friction brake device according to the present invention which is structured as an electromagnetic brake device for a vehicle, as cut along a section passing through a rotation axis.
Fig. 10 is a partial front view showing the fourth embodiment as viewed from right side in Fig. 9.
Fig. 11 is an enlarged partial sectional view which is along IX-IX in Fig. 10.
Fig. 12 is a partial sectional view showing a section of a fifth embodiment of the friction brake device according to the present invention which is structured as an electromagnetic brake device for a vehicle, as cut along a section passing through a rotation axis.
Fig. 13 is a partial front view showing the fifth embodiment as viewed from right side in Fig. 12.
Fig. 14 is an enlarged sectional view which is along XIV-XIV in Fig. 13.
Fig. 15 is an explanatory view showing the principle of increasing pressing forces in the brake device according to the present invention.
Fig. 16 is a partial sectional view showing a modification of the cam surface of a force transmission mechanism.
Fig. 17 is a partial sectional view showing another modification of the cam surface of a force transmission mechanism.

### MODE FOR CARRYING OUT THE INVENTION

The present invention will now be described in detail with respect to preferred embodiments by referring to the accompanying drawings.

### First Embodiment

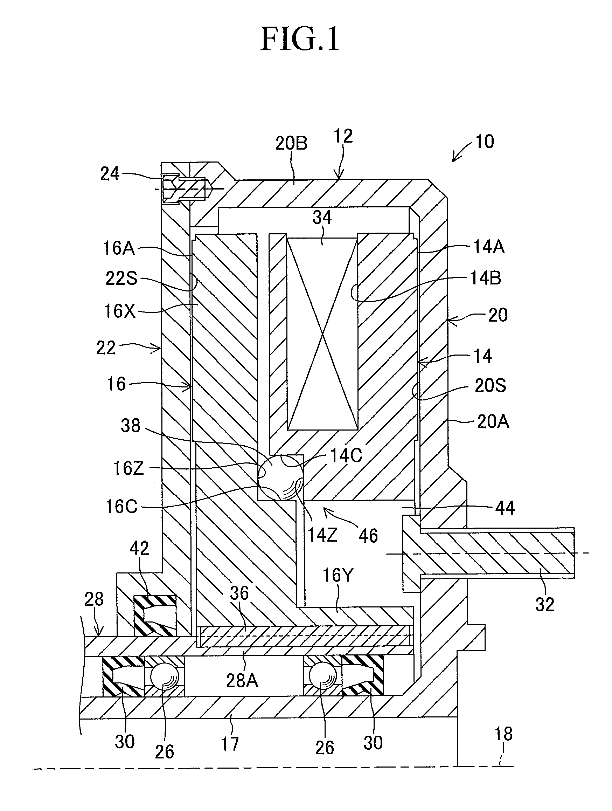

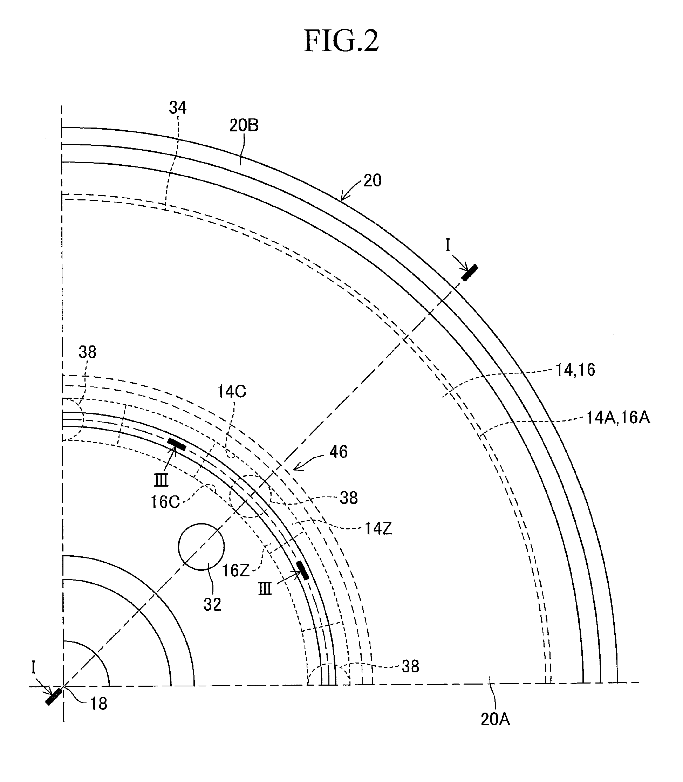

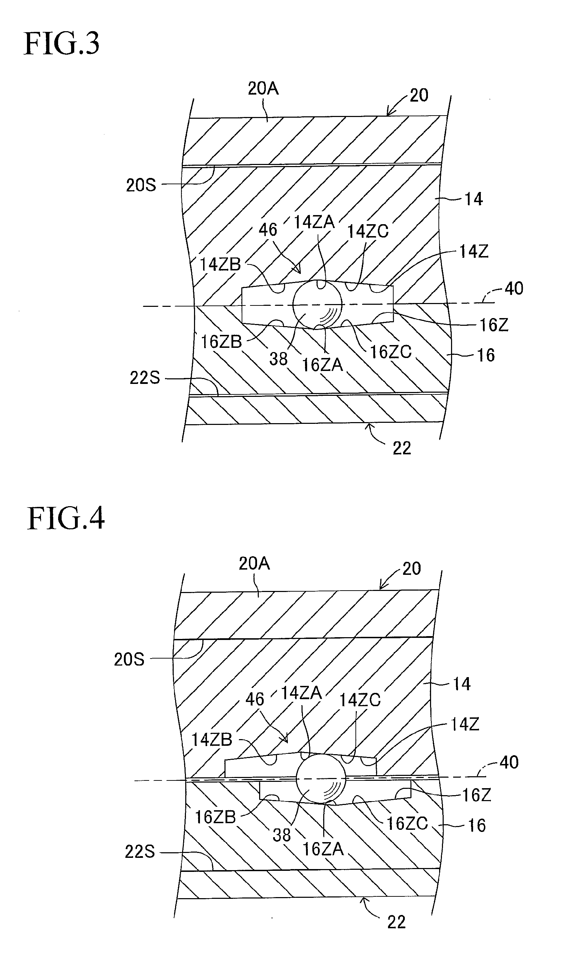

Fig. 1 is a partial sectional view showing a section of a first embodiment of the friction brake device according to the present invention which is structured as an electromagnetic brake device for a vehicle, as cut along a section passing through a rotation axis. Fig. 2 is a partial front view showing the first embodiment as viewed from right side in Fig. 1. Fig. 3 is a partial sectional view which is along III-III in Fig. 2. Notably, Fig. 1 is a sectional view which is along I-I in Fig. 2.

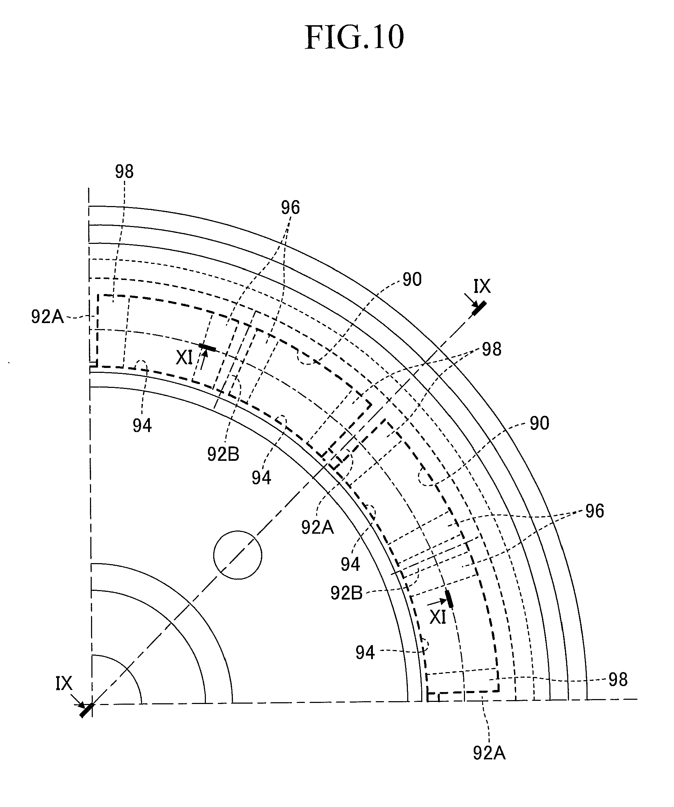

In Fig. 1, 10 denotes a whole of the brake device. The brake device 10 has a brake rotor 12, a first pressing member 14 and a second pressing member 16. The brake rotor 12 rotates around a rotation axis 18 together with a rotating shaft 17 of a vehicle wheel, not shown. In particular, in the illustrated embodiment, the brake rotor 12 has a main rotor 20 which is integral with the rotating shaft 17 and a sub-rotor 22 which rotates integrally with the main rotor. The main rotor 20 and the first pressing member 14 are made from a metal having paramagnetism but the second pressing member 16 and the sub-rotor 22 may be made from a metal having no paramagnetism.

The main rotor 20 has a disk part 20A and a cylindrical part 20B which are spaced apart from each other along the rotation axis 18. The disk part 20A is integrally connected at the inner peripheral portion to the rotating shaft 17 and extends like an annular plate perpendicularly to the rotation axis 18 around the rotation axis 18. The cylindrical part 20B is integrally connected to the outer peripheral portion of the disk part 20A and extends cylindrically around the rotation axis 18. The sub-rotor 22 extends like an annular plate perpendicularly to and around the rotation axis 18 and is coupled at the outer peripheral portion to an end of the cylindrical part 20B opposite to the disk part 20A by a plurality of bolts 24.

It is to be noted that the disk part 20A and the sub-rotor 22 have the same thickness and the thickness of the cylindrical part 20B is smaller than those of the disk part 20A and the sub-rotor 22. However, since the cylindrical part 20B extends cylindrically around the rotation axis 18, it has a rigidity higher that those of the disk part 20A and the sub-rotor 22.

Thus, the disk part 20A and the sub-rotor 22 serve as first and second disk parts, respectively, which extend like anannular plate perpendicularly to and around the rotation axis 18 and are spaced apart along the rotation axis 18. The cylindrical part 20B serves as a connection part which cooperates with the bolts 24 to integrally connect the outer peripheral portions of the disk part 20A and the sub-rotor 22. The disk part 20A, the cylindrical part 20B and the sub-rotor 22 form a staple-like sectional shape which opens radially inwardly as viewed in a radial section passing through the rotation axis 18. The opposed surfaces of the disk part 20A and the sub-rotor 22 define a first friction surface 20S and a second friction surface 22S, respectively, which extend perpendicularly to and around the rotation axis 18 and are parallel to each other.

The rotating shaft 17 is rotatably supported around the rotation axis 18 by a sleeve part 28A of a wheel carrier member 28 serving as a stationary member through a pair of ball bearings 26. The space defined by the pair of ball bearings 26, the rotating shaft 17 and the sleeve part 28A is filled with lubricant such as grease. A pair of seal members 30 are located on both sides in axial direction of the pair of ball bearings 26 and seal the space between the rotating shaft 17 and the sleeve part 28A so that dust and muddy water do not enter the ball bearings 26.

Although not shown in the figure, the disk part 20A of the main rotor 20 is adapted to be integrally coupled to a rim part of the vehicle wheel by four bolts and nuts 32 screwed thereto which are spaced apart by 90° around the rotation axis 18. Consequently, the rotating shaft 17 and the brake rotor 12 (the main rotor 20 and the sub-rotor 22) rotate around the rotation axis 18 together with the vehicle wheel.

The first pressing member 14 has a ring shape which extends around the rotation axis 18 over the entire circumference. The side surface of the first pressing member 14 which opposes to the first friction surface 20S of the disk part 20A is integrally formed with a first frictional engagement portion 14A which serves a first frictional engagement member. The first frictional engagement portion 14A extends like a ring strip around the rotation axis 18 over the entire circumference. The first pressing member 14 has ring groove 14B which extends around the rotation axis 18 over the entire circumference and opens radially outwardly. A solenoid 34 is positioned in the ring groove 14B and annually extends around the rotation axis 18.

Although not shown in the figure, supply of electricity to the solenoid 34 is controlled by an electronic control unit. Notably, braking operation amount of a driver such as depressing force on a brake pedal may be detected and the control electric current supplied to the solenoid 34 may be controlled so that the electric current increases as the braking operation amount increases.

A second pressing member 16 has a ring plate part 16X and a cylindrical part 16Y which are integral with each other. The ring plate part 16X extends around the rotation axis 18 over the entire circumference. The outer peripheral of the ring plate part 16X is spaced apart from the first pressing member 14 and is positioned between the first pressing member 14 and the sub-rotor 22. The side surface of the ring plate part 16X opposite to the first pressing member 14 is integrally formed with a second frictional engagement portion 16A which serves as a second frictional engagement member. The second frictional engagement portion 16A extends like a ring strip around the rotation axis 18 over the entire circumference as opposed to the second friction surface 22S.

It is to be noted that the first and second pressing members 14 and 16 may be produced by, for example, powder metallurgy so that the first frictional engagement portion 14A and the second frictional engagement portion 16A are integrally formed with the first and second pressing members 14 and 16, respectively. Alternatively, the first frictional engagement portion 14A and the second frictional engagement portion 16A may be formed by adhering a ring strip made from frictional material to a side surface of the ring plate part by means of adhesive or other means. Furthermore, although the first frictional engagement portion 14A and the second frictional engagement portion 16A are made from the same frictional material, they may be made from different frictional materials from each other. While the frictional material may be any frictional material having a good durability, it is preferably a frictional material of ceramics having also a good heat-resisting property.

The second pressing member 16 mates with the sleeve part 28A of a wheel carrier member 28 with a small clearance. A key 36 is inserted into key grooves which are provided on the inner surface of the cylindrical part 16Y and the outer surface of the sleeve part 28A and extend along the rotation axis 18. Consequently, the second pressing member 16 is supported by the wheel carrier member 28 so that the member cannot rotate around the rotation axis 18 but can displace along the rotation axis 18.

The ring plate part 16X has a column-like shoulder 16C which faces radially outwardly on the side of the first pressing member 14, which in turn has a column-like shoulder 14C which radially opposes to the shoulder 16C. The shoulders 14C and 16C have radially spaced sections at eight positions which are equally spaced apart from each other around the rotation axis 18. A ball 38 is positioned at each section between the shoulders 14C and 16C. The balls 38 are made from a substantially rigid material such as a metal. Consequently, the first pressing member 14 is supported by the second pressing member 16 via balls 38 so that the first pressing member can rotate around the rotation axis 18 and can displace along the rotation axis 18.

The first and second pressing members 14 and 16 have eight cam surfaces 14Z and 16Z, respectively, in the areas between the shoulders 14C and 16C. The cam surfaces can engage with the associated balls 38. As shown in Fig. 3, the cam surfaces 14Z and 16Z are provided at the circumferential positions where the associated balls 38 are positioned, and extend in arc shapes each having a center in the rotation axis 18.

As shown in Fig. 3, the cam surfaces 14Z has a curved section 14ZA opening toward the second pressing member 16 and planar inclined sections 14ZB and 14ZC extending continuously from the curved section on both sides of the curved section. The inclined sections 14ZB and 14ZC are inclined relative to a virtual plane 40 extending perpendicularly to the rotation axis 18 so that as the distance from the curved section 14ZA increases, the inclined sections approach the the second pressing member 16. In similar, the cam surfaces 16Z has a curved section 16ZA opening toward the first pressing member 14 and planar inclined sections 16ZB and 16ZC extending continuously from the curved section on both sides of the curved section. The inclined sections 16ZB and 16ZC are inclined relative to the virtual plane 40 so that as the distance from the curved section 16ZA increases, the inclined sections approach the first pressing member 14.

In the illustrated embodiment, as shown in Fig. 3, the inclined sections 14ZB and the like have the same inclination in magnitude. In consequence, the inclined sections 14ZB and 16ZC, and 14ZC and 16ZB which oppose to each other in a radial direction of each ball 38 are inclined in the same direction relative to the virtual plane 40 and extend in parallel to each other.

In particular, in the illustrated embodiment, as shown in Fig. 1, the inner peripheral portion of the sub-rotor 22 mates with the sleeve part 28A of the wheel carrier member 28. A seal member 42 is positioned between the inner peripheral portion of the the sub-rotor 22 and the sleeve part 28A and extends around the rotation axis 18 over the entire circumference.

Accordingly, the main rotor 20 and the sub-rotor 22 cooperate with the rotating shaft 17, the wheel carrier member 28 and the seal member 42 to form a closed space 44. The first pressing member 14, the second pressing member 16, the solenoid 34 and the balls 38 are positioned in the closed space 44 and the latter is filled with a lubricant. Consequently, frictional force is not substantially generated between the balls and the shoulders 14C and 16C and between the balls 38 and the cam surfaces 14Z and 16Z.

It is to be noted that as shown in Fig. 1, when no electric control current is supplied to the solenoid 34, the first and second pressing members 14 and 16 are positioned in normal positions shown in Fig. 3. When the two pressing members are positioned in the normal positions, the distance between the surfaces of the first frictional engagement portion 14A and the second frictional engagement portion 16A assumes a minimum value and no fore is generated which forces to separate the two pressing members from each other. Consequently, the first frictional engagement portion 14A and the second frictional engagement portion 16A do not substantially frictionally engage with the friction surface 20S of the disk part 20A and the second friction surface 22S of the sub-rotor 22.

In the first embodiment, when a braking operation is made by a driver, an electric control current corresponding the braking operation amount is supplied to the solenoid 34 and attractive force acts between the first pressing member 14 and the disk part 20A which is the electromagnetic force generated by the solenoid 34. As a result, the first pressing member 14 is pressed against the disk part 20A, which makes the first frictional engagement portion 14A engage with the friction surface 20S of the disk part 20A. Consequently, the solenoid 34 cooperates with the first pressing member 14 and the disk part 20A to function as a pressing force control mechanism which controls pressing force pressing the first pressing member 14 against the disk part 20A.

If the wheel not shown in the figure is rotating, the first pressing member 14 receives rotational torque around the rotation axis 18 which is generated by he frictional force between the first frictional engagement portion 14A and the friction surface 20S of the disk part 20A, and rotates relative to the second pressing member 16 around the rotation axis 18. As a result, the first and second pressing members 14 and 16 relatively rotate in the opposite directions to each other as shown in Fig. 4, which makes the cam surfaces 14Z and 16Z approach each other. However, since the balls 38 cannot compressively deform, so called wedge effect is generated, which makes the first and second pressing members 14 and 16 remove from each other along the rotation axis 18.

That is, the balls 38 and the cam surfaces 14Z, 16Z cooperate with each other to displace the first and second pressing members 14 and 16 in the direction of separating them from each other along the rotation axis 18. Besides, the balls 38 and the cam surfaces 14Z, 16Z cooperate with each other to transmit rotational torque acting around the rotation axis 18 of the first pressing member 14 to the second pressing member 16, and to transform the rotational torque into the force separating the two pressing members from each other. Furthermore, the balls 38 and the cam surfaces 14Z, 16Z transmit reaction force mutually between the two pressing members, the reaction force being generated by means of frictional engagement members being pressed against the associated friction surfaces by the pressing members.

Thus, the balls 38 and the cam surfaces 14Z, 16Z define a force transmitting mechanism 46 which conducts transmission of rotational torque between the first and second pressing members 14 and 16, generation of the force separating the two pressing members from each other along the rotation axis 18, and transmission of the reaction force. The first frictional engagement portion 14A and the second frictional engagement portion 16A are pressed against the friction surface 20S of the disk part 20A and the friction surface 22S of the sub-rotor 22, respectively, by the action of the force transmitting mechanism 46, and thereby frictionally engage with the associated friction surfaces. In addition, the balls 38 and the cam surfaces 14Z, 16Z cooperate with each other to function as a positioning mechanism which positions the first and second pressing members 14 and 16 at their normal positions.

It is to be noted that the rotational torque is proportional to the attractive force of the electromagnetic force generated by the solenoid 34 and the force separating the first and second pressing members 14 and 16 from each other is proportional to the rotational torque. Consequently, the pressing force with which the first and second pressing members 14 and 16 act against the disk part 20A and the sub-rotor 22, respectively, is proportional to the braking operation amount of a driver.

The second pressing member 16 is prevented from rotating around the rotation axis 18 relative to the wheel carrier member 28 by the key 36 and the key groove receiving the key. In consequence, the wheel carrier member 28 functions as a rotational torque bearing member bearing the rotational torque which the second pressing member 16 receives from the first pressing member 14.

Thus, according to the first embodiment, during braking, the frictional engagement portions 14A and 16A are pressed against the friction surface 20S of the disk part 20A and the friction surface 22S of the sub-rotor 22, respectively, by means of the solenoid 34 being energized. Consequently, braking force is generated by the frictional force between the frictional engagement portions 14A , 16A and the friction surfaces 20S, 22S, respectively.

The rotational torque acting around the rotation axis 18 is transmitted from the first pressing member 14 to the second pressing member 16 by the force transmitting mechanism 46 and is transformed into the force separating the two pressing members from each other by the wedge action of the force transmitting mechanism 46. The rotational force generated by the press of the pressing members 14 and 16 is transmitted to the other of the pressing members via the force transmitting mechanism 46.

Thus, it is possible to effectively utilize the rotational torque of the brake rotor 12 to increase the pressing force by means of the wedge action of the force transmitting mechanism 46, and to increase pressing forces by means of transmission of reaction force conducted via the force transmitting mechanism 46. Consequently, since the force transmitting mechanism 46 cooperates with the wheel carrier member 28 serving as a stationary member to function as a force-increasing mechanism, higher braking force can be generated as compared to where no force transmitting mechanism 46 is provided. Notably, this advantageous effect can be obtained as well in the under-described second and third embodiments.

According to the first embodiment, the structure of the brake device can be simplified in comparison with the brake device described in the above-mentioned Laid-Open Publication where the reaction force generated by pressing a frictional engagement member against a friction surface by means of a pressing member is borne by another member other than the pressing member. Higher braking torque can be generated in comparison with the brake device described in the above-mentioned Laid-Open Publication where a frictional engagement member is pressed against only one friction surface of a brake disk.

In particular, according to the first embodiment, the frictional engagement portions 14A , 16A of the pressing members 14, 16 are constantly in frictional contact with the friction surface 20S of the disk part 20A and the friction surface 22S of the sub-rotor 22, respectively, over the entire circumference around the rotation axis 18. Consequently, it is possible to effectively reduce the possibility that brake vibrations such as flutter, vibration of brake pedal, vibration of a vehicle body and the like occur due to a phenomena where braking torque which a pair of frictional engagement members afford cyclically varies.

In comparison with a conventional friction brake device in which pressing and frictional contact are conducted at a small part of the entire circumference, the possibilities can be reduced that a brake rotor locally deforms cyclically and/or pressing force against the brake rotor varies cyclically. Consequently, risks of vibration and abnormal abrasion of a brake rotor and/or brake squeal can effectively be reduced. Notably, these advantageous effects can be obtained as well in the under-described third and fifth embodiments.

According to the first embodiment, the frictional engagement portions 14A and 16A which are pressed against the friction surface 20S of the disk part 20A and the friction surface 22S of the sub-rotor 22, respectively are integrally formed with the pressing member 14 and 16, respectively. Consequently, in comparison with the under-described second embodiment where the frictional engagement portions 14A and 16A which are pressed against the friction surface 20S of the disk part 20A and the friction surface 22S of the sub-rotor 22, respectively, are formed independently of the pressing members 14 and 16, the number of parts can be reduced and the structure of the brake device can be simplified. Notably, these advantageous effects can be obtained as well in the under-described third and fifth embodiments.

### Second Embodiment

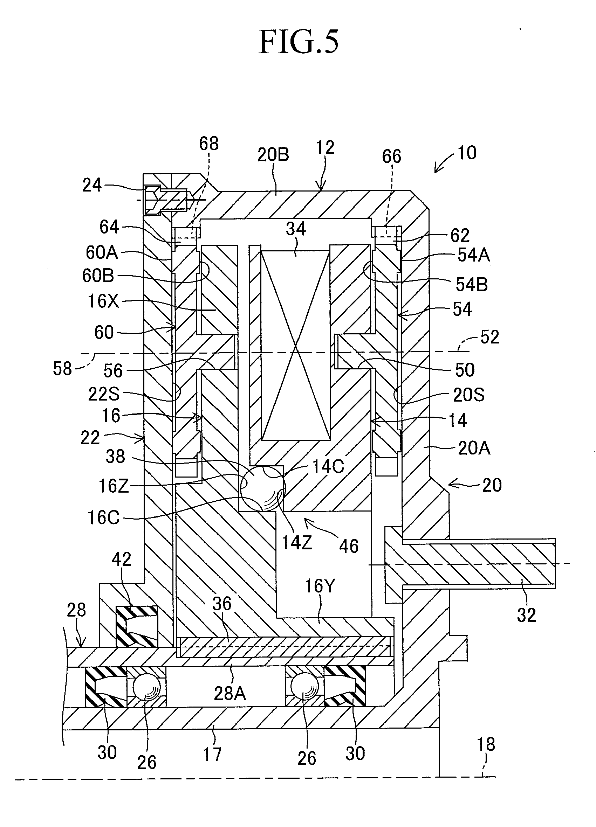

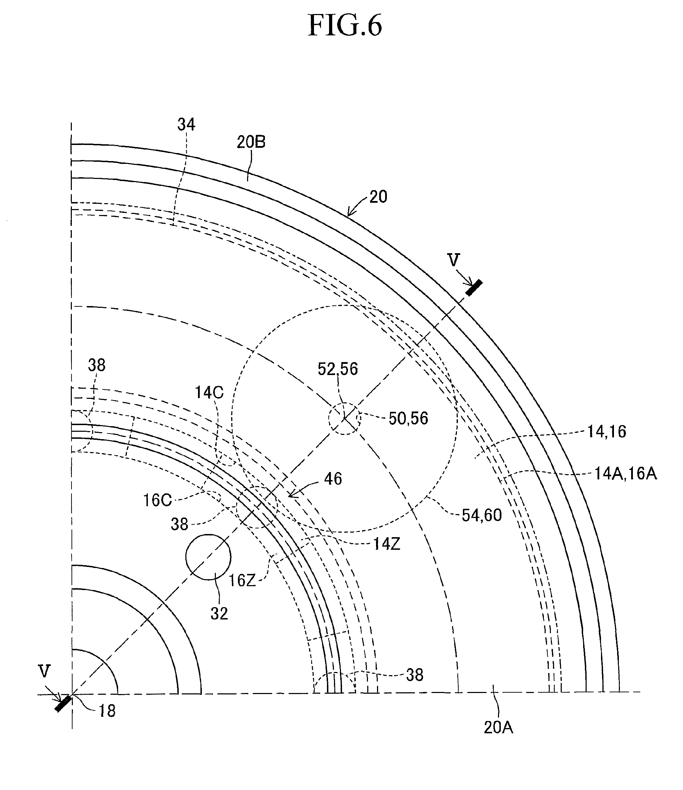

Fig. 5 is a partial sectional view showing a section of a second embodiment of the friction brake device according to the present invention which is structured as an electromagnetic brake device for a vehicle, as cut along a section passing through a rotation axis. Fig. 6 is a partial front view showing the second embodiment as viewed from right side in Fig. 5. Notably, Fig. 5 is a sectional view which is along V-V in Fig. 6. In Figs. 5 and 6, the same members as those shown in Figs. 1 and 2 are denoted by the same reference numbers as in Figs. 1 and 2.

In the second embodiment, the first pressing member 14 is provided with bearing holes 50 each having a bottom at four positions spaced 90° apart from each other around the rotation axis 18 and each bearing hole 50 extends along an axis 52 which is parallel to the rotation axis 18. Four first frictional engagement members 54 are positioned as aligned with the associated axis 52 between the first pressing member 14 and the disk part 20A of the main rotor 20. In similar, the second pressing member 16 is provided with bearing holes 56 each having a bottom at four positions spaced 90° apart from each other around the rotation axis 18 and each bearing hole 56 extends along an axis 58 which is parallel with the rotation axis 18. Four second frictional engagement members 60 are positioned as aligned with the associated axis 58 between the second pressing member 16 and the sub-rotor 22. In the illustrated embodiment, the axes 52 and 58 are equally spaced from the rotation axis 18.

The frictional engagement members 54 and 60 each have a disk part and a shaft part which are aligned with each other. The disk parts are positioned on the sides of the disk part 20A and the sub-rotor 22. The shaft parts of the frictional engagement members 54 and 60 mate with the bearing holes 50 and 56, respectively, and the frictional engagement members 54 and 60 are supported by the first and second pressing members 14 and 16, respectively, so that the frictional engagement members can rotate around the axes 52 and 58, respectively.

The disk part of each first frictional engagement member 54 has frictional portions 54A and 54B on the opposite sides of its outer peripheral portion. The frictional portions 54A and 54B can frictionally engage with the side surfaces of the disk part 20A and the first pressing member 14, respectively. In similar, the disk part of each second frictional engagement member 60 has frictional portions 60A and 60B on the opposite sides of its outer peripheral portion. The frictional portions 60A and 60B can frictionally engage with the side surfaces of the sub-rotor 22 and the second pressing member 16, respectively. Each frictional portion bulges from the side surface of the associated disk part and extends as an annular strip around the axis of the associated frictional engagement member.

It is to be noted that the first frictional engagement member 54 and the second frictional engagement member 60 may be produced by, for example, powder metallurgy so that the frictional portions are integrally formed with the associated disk parts. Alternatively, the frictional portions may be formed by adhering annular strips made from frictional material to the side surfaces of a disk part by means of adhesive or other means. Furthermore, although the frictional portions 54A, 54B, 60A and 60B are made from the same frictional material, they may be made from different frictional materials from each other. While the frictional material may be any frictional material having a good durability, it is preferably a frictional material of ceramics having also a good heat-resisting property.

External gears 62 and 64 are provided on the circumference of disk parts of the first frictional engagement member 54 and the second frictional engagement member 60, respectively. The external gears 62 and 64 mesh with internal gears 66 and 68, respectively, provided on the inner surface of the cylindrical part 20B of the main rotor 20. Accordingly, the first frictional engagement member 54 and the second frictional engagement member 60 can rotate about the axes 52 and 58, respectively, and can move relative to the cylindrical part 20B of the main rotor 20 around the rotation axis 18 so that the frictional engagement members roll on the inner surface of the cylindrical part 20B of the main rotor 20.

As will be apparent from comparing Figs. 5 and 6 with Figs. 1 and 2, the second embodiment is structured in other aspects similarly to the above-described first embodiment. When the solenoid 34 is not supplied with an electric current; the balls 38 are aligned with the curved parts of the cam surfaces 14Z and 16Z; and the first and second pressing members 14 and 16 are in the normal positions, the axes 52 and 58 are aligned with each other. When the two pressing members are in the normal positions, the distance between the outer surfaces of the first frictional engagement member 54 and the second frictional engagement member 60 along the rotation axis 18 assumes a minimum value and no force is generated which separate the two pressing members.

In the second embodiment, when the brake rotor 12 is rotating around the rotation axis 18, the rotation of the cylindrical part 20B of the main rotor 20 is transmitted to the first frictional engagement member 54 and the second frictional engagement member 60 by way of the meshed portions between the external gears 62, 64 and the internal gears 66, 68, respectively. Accordingly, the first frictional engagement member 54 and the second frictional engagement member 60 rotate about the axes 52 and 58, respectively, and revolve around the rotation axis 18 relative to the disk part 20A and the sub-rotor 22, respectively.

Thus, except that the frictional engagement members 54 and 60 are separate from the pressing members 14 and 16, respectively, and rotate about the axes 52 and 58 relative to the pressing members 14 and 16, respectively, the second embodiment operates similarly to the first embodiment. In consequence, according to the second embodiment, as in the first embodiment, higher braking force can be generated than in the brake device described in the above-mentioned Laid-Open Publication.

In particular, according to the second embodiment, the frictional engagement members 54 and 60 frictionally engage on their both side surfaces with the main rotor 20, the sub-rotor 22 and the pressing members 14 and 16, respectively, and rotate about the axes 52 and 58, which enables to generate higher braking force than in the first embodiment. As compared to where the frictional engagement members 54 and 60 do not rotate about their own axes, the risk in which the frictional portions of the frictional engagement members undergo uneven wear can be reduced, which enables to reduce the risk of brake squeal and enhance the durability of the brake device.

### Third Embodiment

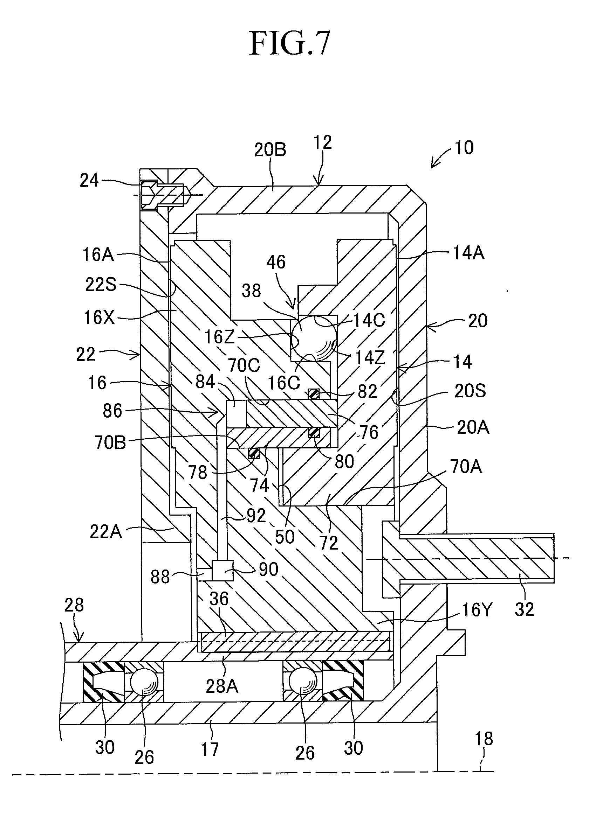

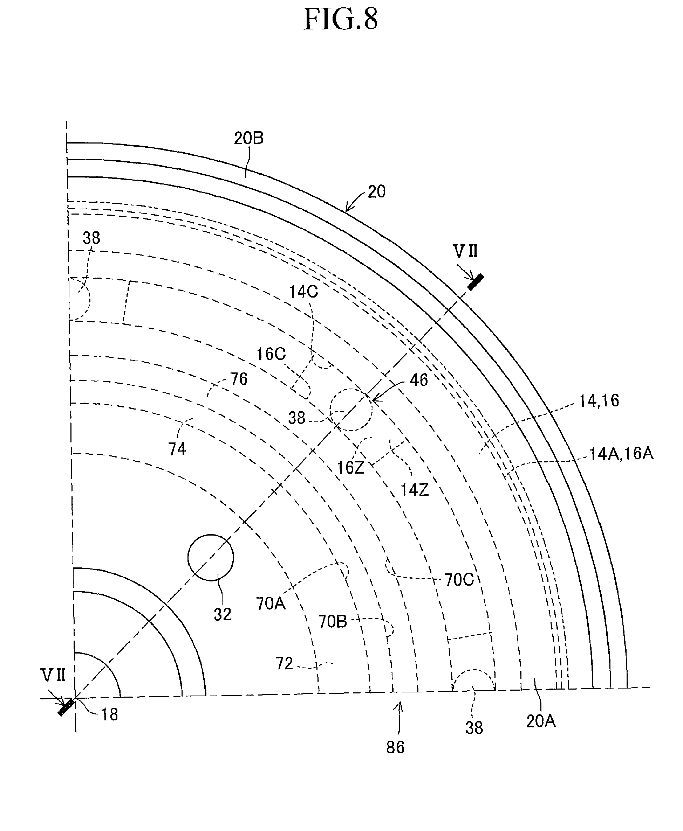

Fig. 7 is a partial sectional view showing a section of a third embodiment of the friction brake device according to the present invention which is structured as a hydraulic brake device for a vehicle, as cut along a section passing through a rotation axis. Fig. 8 is a partial front view showing the third embodiment as viewed from right side in Fig. 7. Notably, Fig. 7 is a sectional view which is along VII-VII in Fig. 8. In Figs. 7 and 8, the same members as those shown in Figs. 1 and 2 are denoted by the same reference numbers as in Figs. 1 and 2.

In the third embodiment, the inner peripheral portion of the sub-rotor 22 does not engage with the wheel carrier member 28, and, on the radially outer side of the wheel carrier member 28, has a cylindrical part 22A extending along the rotation axis 18 toward the disk part 20A. The tip end of the cylindrical part 22A is spaced apart from the second pressing member 16.

The second pressing member 16 has a stepped cylindrical hole 70 on the side of the first pressing member 14. The cylindrical hole 70 extends around the rotation axis 18 over the entire circumference and along the rotation axis 18. The first pressing member 14 has a cylindrical part 72 at its inner peripheral portion, which extends around the rotation axis 18 over the entire circumference and along the rotation axis 18. The cylindrical part 72 mates with a radially inwardly positioned cylindrical outer surface 70A of the cylindrical hole 70 so that the part can rotate around the rotation axis 18 and can relatively displace along the rotation axis 18.

A cylindrical body 74 mates substantially snugly with a radially outwardly positioned cylindrical outer surface 70B of the cylindrical hole 70. The cylindrical body 74 extends around the rotation axis 18 over the entire circumference and along the rotation axis 18. A cylindrical piston 76 is positioned between the cylindrical body 74 and a cylindrical inner surface 70C of the cylindrical hole 70. The piston 76 extends as well around the rotation axis 18 over the entire circumference and along the rotation axis 18. The piston 76 mates substantially snugly with the cylindrical body 74 and the cylindrical inner surface 70C so that the piston can displace along the rotation axis 18 relative to the cylindrical body 74 and the second pressing member 16.

The clearance between the radially outwardly positioned cylindrical outer surface 70B and the cylindrical body 74 is sealed by an O-ring seal 78. The clearances between the cylindrical body 74 and the piston 76 and between the cylindrical inner surface 70C and the piston 76 are sealed by O-ring seals 80 and 82, respectively. Thus, the second pressing member 16, the cylindrical body 74 and the piston 76 define a hydraulic piston-cylinder device 86 having a cylinder chamber 84 which extends around the rotation axis 18 over the entire circumference.

The second pressing member 16A is provided with a port 88 which is communicatingly connected with a master cylinder (not shown). The port 88 communicates with an annular passage 90 which extends around the rotation axis 18 over the entire circumference within the second pressing member 16. The annular passage 90 in turn is communicatingly connected with the cylinder chamber 84 by a plurality of radial passages 92 which extends radially within the second pressing member 16. Thus, the cylinder chamber 84 is supplied with a master cylinder pressure by way of the port 88, the annular passage 90 and the radial passages 92.

Thus, the hydraulic piston-cylinder device 86 functions as a part of pressing control mechanism which presses both the first and second pressing members 14 and 16 against the disk part 20A and the sub-rotor 22, respectively, in the opposite directions to each other. As the pressing force corresponds to the pressure in the cylinder chamber 84, i.e., a master cylinder pressure, it corresponds to a braking operation amount of a driver.

In the third embodiment, a force transmitting mechanism 46 is also provided which has the same structure as the force transmitting mechanism 46 in the first embodiment. It is to be noted that although the force transmitting mechanism 46 is located on the radially outer side relative to the hydraulic piston-cylinder device 86, it may be located on the radially inner side relative to the hydraulic piston-cylinder device 86. Notably, the third embodiment is structured in other aspects similarly to the above-described first embodiment.

Upon the first pressing member 14 is pressed against the disk part 20A by the pressing force of the hydraulic piston-cylinder device 86 and frictionally engages with the friction surface 20S of the disk part 20A, the pressing member receives rotational torque from the disk part 20A. In similar, upon the second pressing member 16 is pressed against the sub-rotor 22 by the pressing force of the hydraulic piston-cylinder device 86 and frictionally engages with the second friction surface 22S of the sub-rotor 22, the pressing member receives rotational torque from the sub-rotor 22.

As the first pressing member 14 is supported by the second pressing member 16 so as to rotate around the rotation axis 18, the first pressing member rotates around the rotation axis 18. On the other hand, as the second pressing member 16 is supported so that it can relatively displace along the rotation axis 18 but cannot rotate around the rotation axis 18, the second pressing member does not rotate around the rotation axis 18. Accordingly, the first and second pressing members 14 and 16 rotate relatively to each other around the rotation axis 18.

Thus, as in the first embodiment, a part of the rotational torque transmitted to the first pressing member 14 is transformed by the force transmitting mechanism 46 into the force which presses the first and second pressing members 14 and 16 so as to separate them from each other along the rotation axis 18. Consequently, this increases the force pressing the first and second pressing members 14 and 16 against the disk part 20A and the sub-rotor 22, respectively. The force that the first and second pressing members 14 and 16 receive from the disk part 20A and the sub-rotor 22, respectively, are transmitted to the other pressing member, and thereby act as effective pressing force.

As is apparent from the above description, in this embodiment, the piston-cylinder device 86 functions as a pressing force control mechanism which cooperates with the first and second pressing members 14 and 16 to press these pressing members against the disk part 20A and the sub-rotor 22, respectively.

The pressing force that is generated by the piston-cylinder device 86 is proportional to a braking operation amount of a driver, and the pressing force which is increased by the force transmitting mechanism 46 is proportional to the pressing force that is generated by the piston-cylinder device 86. As a result, the pressing force which presses the first and second pressing members 14 and 16 against the disk part 20A and the sub-rotor 22, respectively, is proportional to a braking operation amount of the driver.

Therefore, according to the third embodiment, advantageous effects similar to those of the above-described first embodiment can be obtained. That is, in comparison with the brake device described in the above-mentioned Laid-Open Publication, the structure of the brake device can be simplified and higher braking torque can be generated.

In particular, according to the third embodiment, the piston-cylinder device 86 presses the first and second pressing members 14 and 16 against the disk part 20A and the sub-rotor 22, respectively. Consequently, in comparison with the other embodiments in which the pressing force control mechanism presses only one of the pressing members against the disk part 20A or the sub-rotor 22, braking force can be generated with good responsiveness from the time point of starting the control.

According to the third embodiment, only a pressure in the master cylinder that is not shown in the figure needs to be introduced into the cylinder chamber 84 of the piston-cylinder device 86. In consequence, the brake device according to the third embodiment can be applied to a hydraulic brake device which does not require detecting a braking operation amount of a driver.

### Fourth Embodiment

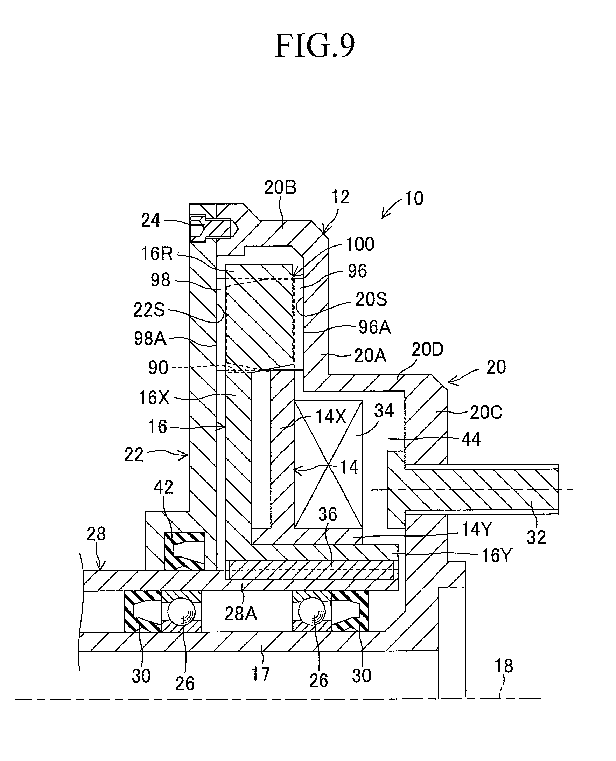

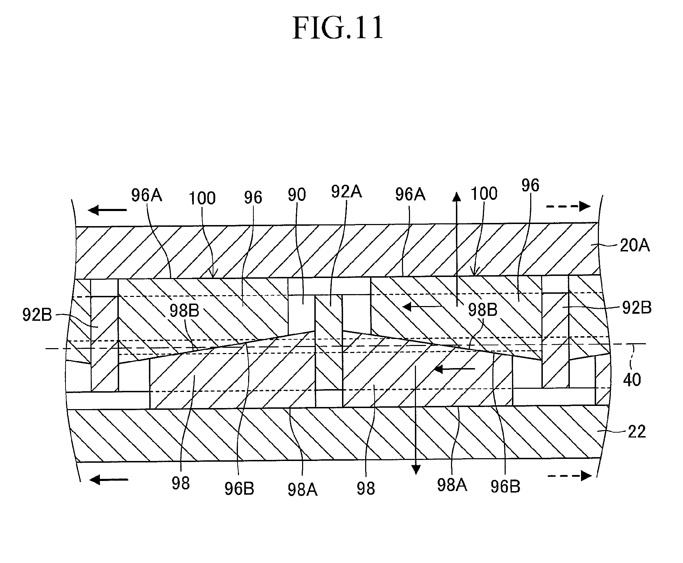

Fig. 9 is a partial sectional view showing a section of a fourth embodiment of the friction brake device according to the present invention which is structured as an electromagnetic brake device for a vehicle, as cut along a section passing through a rotation axis. Fig. 10 is a partial front view showing the fourth embodiment as viewed from right side in Fig.9. Fig. 11 is an enlarged partial sectional view which is along IX-IX in Fig. 10. Notably, Fig. 9 is a sectional view which is along IX-IX in Fig. 10. In Figs. 9 and 10, the same members as those shown in Figs. 1 and 2 are denoted by the same reference numbers as in Figs. 1 and 2.

In the fourth embodiment, the first pressing member 14 has an annular plate part 14X and a cylindrical part 14Y which are integral with each other, and the annular plate part 14X extends around the rotation axis 18 over the entire circumference. A solenoid 34 is disposed around the cylindrical part 14Y. The solenoid 34 extends annularly around the rotation axis 18 as secured to the annular plate part 14X and the cylindrical part 14Y. The cylindrical part 14Y mates with the cylindrical part 16Y of the second pressing member 16 so that the cylindrical part 14Y can rotate relative to the cylindrical part 16Y and can displace relative to the cylindrical part 16Y along the rotation axis 18. Thus, the first pressing member 14 is supported by the second pressing member 16 so that the first pressing member can rotate relatively around the rotation axis 18 and can displace relatively along the rotation axis 18.

As shown in Fig. 9, as the solenoid 34 is disposed radially inwardly than in the first and second embodiments, the disk part 20A of the main rotor 20 is closer to the sub-rotor 22 than a coupling part 20C which is coupled to a rim part of a vehicle wheel is. The disk part 20A and the coupling part 20C are integrally connected by a cylindrical part 20D extending along the rotation axis 18.

The outer peripheral portion of the second pressing member 16 is integrally provided with a rim part 16R, which is thicker than the annular plate part 16X and projects toward the first pressing member 14. The rim part 16R extends around the rotation axis 18 over the entire circumference. The inner diameter of the portion which projects toward the first pressing member 14 gradually increases toward its tip end so that the inner surface of the portion is tapered.

As shown in Figs. 10 and 11, the rim part 16 is provided with eight through holes 90 equally spaced apart circumferentially and each through hole 90 extends arcuately around the rotation axis 18. Partition walls 92A are provided between the through holes 90. The partition walls 92A extend radially and along the rotation axis 18. The radially inner surfaces and radially outer surfaces of the through holes 90 are cylindrical extending along the rotation axis 18.

Eight partition walls 92B equally spaced apart circumferentially are formed with the outer peripheral portion of the annular plate part 14X of the first pressing member 14. Each partition wall 92B has substantially the same thickness and extends radially and along the rotation axis 18. Each partition wall 92B is fit into the associated through hole 90 so that each through hole 90 is divided into two so as to form sixteen arcuate holes 94 spaced apart circumferentially. The part of each partition wall 92B which Is located on the side of the second pressing member 16 is tapered toward its tip end so as to be easily inserted into the associated through hole 90.

In each arcuate hole 94, a first wedge member 96 is disposed adjacently to the disk part 20A and a second wedge member 98 is disposed adjacently to the sub-rotor 22. The wedge members 96 and 98 extend arcuately around the rotation axis 18 and fit in the associated arcuate holes 94. The circumferential lengths of the wedge members 96 and 98 are the same to each other and are shorter than a half of the value which is derived by subtracting the thickness of the partition walls 92B from the circumferential length of the through holes 90. In addition, the radius of the outer cylindrical surface of each wedge member is insignificantly smaller than that of the inner cylindrical surface of the associated through hole 90 and the radius of the inner cylindrical surface of each wedge member is insignificantly larger than that of the outer cylindrical surface of the associated through hole 90. In consequence, the wedge members 96 and 98 can rotate around the rotation axis 18 relative to the first and second pressing members 14 and 16, and can linearly displace along the rotation axis 18 relative to the first and second pressing members 14 and 16.

It is to be noted that the first wedge member 96 is formed from a paramagnetism material as the first pressing member 14 is. Accordingly, when an electric control current is supplied to the solenoid 34 and the first pressing member 14 is magnetized, the first wedge member 96 is as well magnetized, which is pressed against the disk part 20A by a magnetic attractive force that acts on the disk part 20A.

As shown in Fig. 11, the wedge members 96 and 98 are trapezoidal in sections along the circumference around the rotation axis 18. The side surfaces 96A and 98A of the wedge members 96 and 98 which are adjacent to the first and second pressing members 14 and 16, respectively, extend along the virtual plane 40 perpendicular to the rotation axis 18. While on the other hand, the side surfaces 96B and 98B of the wedge members 96 and 98 which are opposite to the first and second pressing members 14 and 16, respectively, are inclined by the same angle relative to the virtual plane 40 perpendicular to the rotation axis 18.

Each wedge member 96 is disposed so that the lower base of the trapezoid is disposed on the side of the associated partition wall 92B and the upper base of the trapezoid is disposed on the side of the associated partition wall 92A. Each wedge member 96 is disposed so that it can contact with the associated partition wall 92B at its surface of the lower base of the trapezoid, but the surface of the upper base of the trapezoid is spaced apart circumferentially from the associated partition wall 92A. While on the other hand, each wedge member 98 is disposed so that the lower base of the trapezoid is disposed on the side of the associated partition wall 92A and the upper base of the trapezoid is disposed on the side of the associated partition wall 92B. Each wedge member 98 is disposed so that it can contact with the associated partition wall 92A at its surface of the lower base of the trapezoid, but the surface of the upper base of the trapezoid is spaced apart circumferentially from the associated partition wall 92B.

The side surfaces 96A and 98A of the wedge members 96 and 98 are defined by the first and second frictional engagement portions which function as first and second frictional engagement members, and the first and second frictional engagement portions are integrally formed with the first and second pressing members 14 and 16, respectively. Consequently, in a situation where the brake rotor 20 is rotating, when the wedge members 96 and 98 are pressed against the disk part 20A and the sub-rotor 22, respectively, the side surfaces 96A and 98A of the wedge members 96 and 98 frictionally engage with the disk part 20A and the sub-rotor 22.

In contrast, the side surfaces 96B and 98B of the wedge members 96 and 98 are made smooth by surface finishing. In consequence, even when the wedge members 96 and 98 which are disposed in the common arcuate hole 94 are relatively moved circumferentially so that the lower bases of their trapezoids approach to each other, no excessive frictional force is generated at the side surfaces 96B and 98B. It is to be noted that the side surfaces 96B and 98B are preferably surface treated so as not to stick with each other.

It is to be noted that during non-braking operation of the brake device where the solenoid 34 is not supplied with a control electric current, each partition wall 92B is positioned at the center of the associated through hole 90 and the circumferential lengths of the arcuate holes 94 which are circumferentially adjacent to each other are the same to each other. The wedge members 96 and 98 are positioned at the normal positions shown in Fig. 11 and are not pressed against the disk part 20A and the sub-rotor 22, respectively, with the result that they do not frictionally engage with the latters.

In the fourth embodiment, the wedge members 96 and 98 cooperate with the arcuate holes 94 and the partition walls 92A and 92B to define a force transmitting mechanism 100 which functions similarly to the force transmitting mechanism 46 in the first to third embodiments. Accordingly, as in the first to third embodiments, the pressing force of the wedge members 96 and 98 acting against the disk part 20A and the sub-rotor 22 are increased.

For example, in a situation where, as shown by an arrow of a bold solid line in Fig. 11, the disk part 20A and the sub-rotor 22 are moved leftward as viewed in Fig. 11, when the solenoid 34 is supplied with the control electric current, the first wedge members 96 are pressed against the disk part 20A. As the side surfaces 96A of the first wedge members 96 frictionally engage with the disk part 20A, the first wedge members 96 are moved leftward. Consequently, the first wedge members 96 located on the right side of the partition walls 92A transmit rotational torques to the wedge members 98.

However, as the partition walls 92A are parts of the second pressing member 16 that cannot rotate around the rotation axis 18, the wedge members 96 and 98 which are located on the right side of the partition walls 92A cannot freely move leftward as viewed in Fig. 11. As a result, a part of the rotational torque is transformed into the force for pressing the wedge member 98 against the sub-rotor 22 by means of the wedge action generated by the cooperation of the side surfaces 96B and 98B, which makes the side surfaces 98A of the wedge members 98 frictionally engage with the sub-rotor 22. Thus, raking force is generated by the frictional engagement between the side surfaces 96A and the disk part 20A and the frictional engagement between the side surfaces 98A and the sub-rotor 22.

The reaction force which is generated as a result that the first wedge members 96 press the disk part 20A is transmitted to the second wedge member 98 and the reaction force which is generated as a result that the second wedge members 98 press the sub-rotor 22 is transmitted to the first wedge members 96. Therefore, as in the first to third embodiments, pressing force can be enhanced by effectively utilizing the reaction force and no special member is required to bear the reaction force.

Incidentally, the first wedge members 96 disposed on the left side of the partition walls 92A transmit rotational torque to the partition walls 92B but cannot transmit rotational torque to the second wedge members 98. However, as the partition walls 92B are part of the first pressing member 14 which can rotate around the rotation axis 18, they can move leftward as viewed in Fig. 11. Accordingly, the first wedge members 96 disposed on the left side of the partition walls 92A can transmit rotational torques to the first wedge members 96 disposed on the left side of the partition walls 92B by way of the partition walls 92B. Therefore, the rotational torque which is received by the first wedge members 96 disposed on the left side of the partition walls 92A are effectively utilized to increase the pressing force.

Notably, in a situation where, as shown by an arrow of a broken line in Fig. 11, the disk part 20A and the sub-rotor 22 are moved rightward as viewed in Fig. 11, the same operation as above can occur. That is, except that the directions are reversed, the wedge members 96 and 98 disposed on the left side of the partition walls 92A function similarly to the wedge members 96 and 98 disposed on the right side of the partition walls 92A in a situation where the disk part 20A and the sub-rotor 22 are moved leftward as viewed in Fig. 11.

As is understood from the above, according to the fourth embodiment, as in the other embodiments described above, higher braking torque can be generated than in the brake device described in the above-mentioned Laid Open Publication.

It is to be noted that in the fourth embodiment, engagements between the side surfaces 96A and 98A of the wedge members 96 and 98 and the disk part 20A and the sub-rotor 22, respectively, are not over the entire circumference around a rotation axis 18 but at eight areas spaced apart circumferentially from each other. In comparison with a conventional brake device in which frictional engagement members are pressed against a brake rotor only at a part of the entire circumference, risks of cyclic deformation of the brake rotor and vibration and brake squeal caused thereby can be reduced.

### Fifth Embodiment

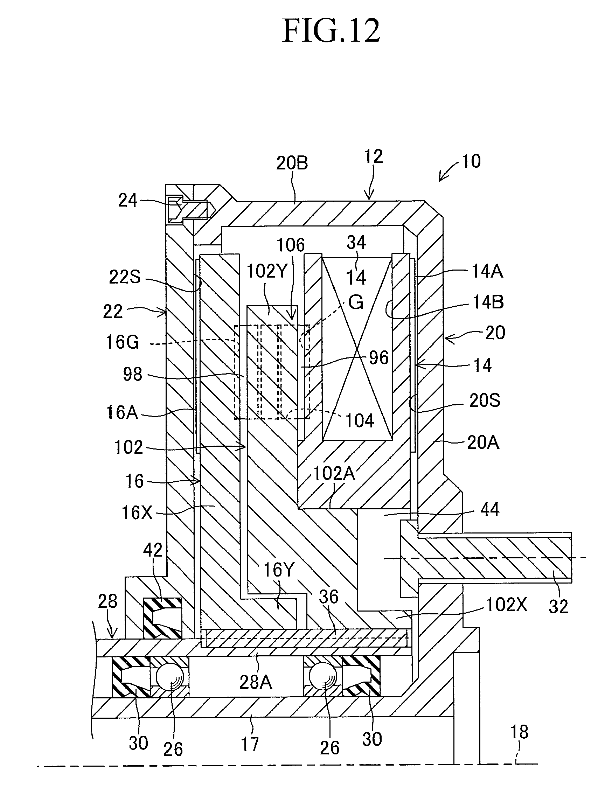

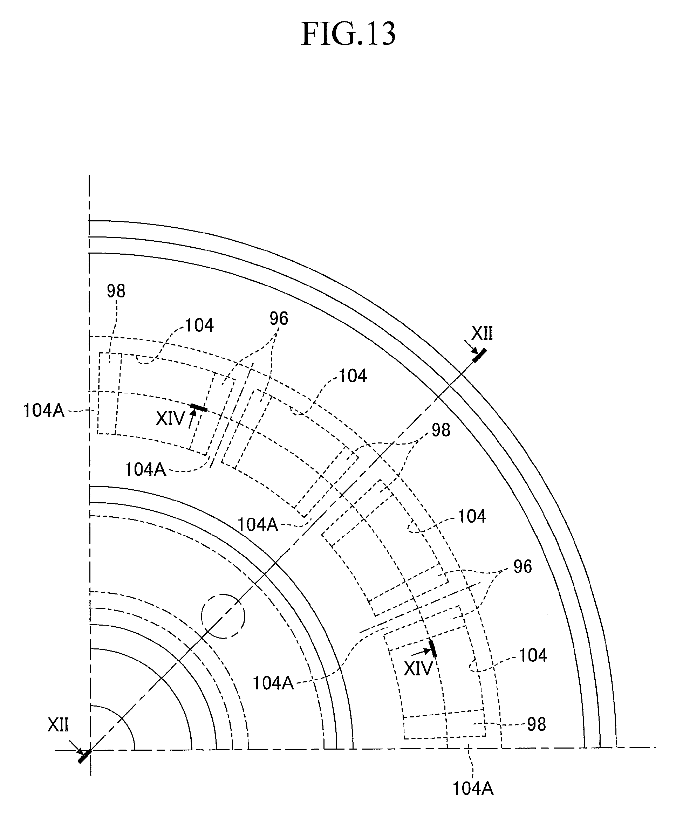

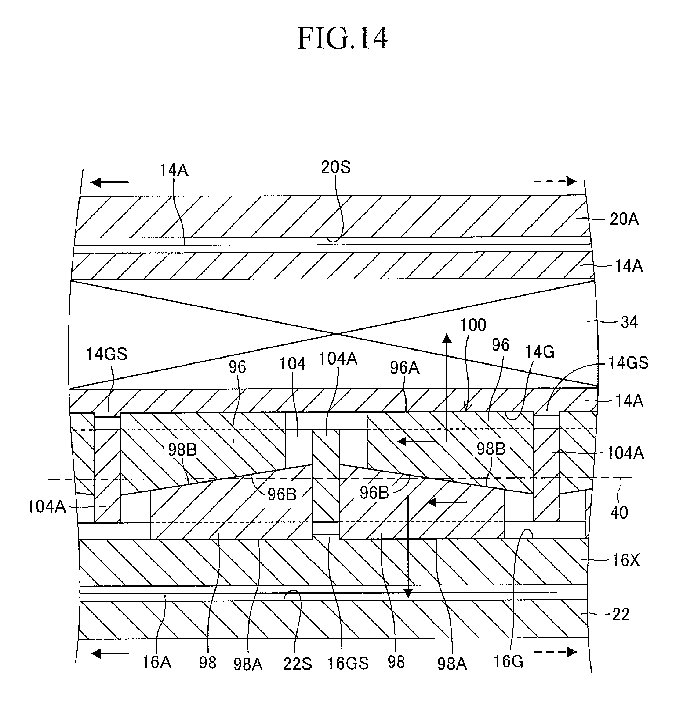

Fig. 12 is a partial sectional view showing a section of a fifth embodiment of the friction brake device according to the present invention which is structured as an electromagnetic brake device for a vehicle, as cut along a section passing through a rotation axis. Fig. 13 is a partial front view showing the fourth embodiment as viewed from right side in Fig.12. Fig. 14 is an enlarged sectional view which is along XIV-XIV in Fig. 13. Notably, Fig. 12 is a sectional view which is along XII-XII in Fig. 13. In Figs. 12 to 14, the same members as those shown in Figs. 1, 2 and Figs. 9 to 11 are denoted by the same reference numbers as in Figs. 1 and 2.

In the fifth embodiment, an intermediate member 102 which extends annually around the rotation axis 18 over the entire circumference is disposed between the first and second pressing members 14 and 16. The intermediate member 102 is securely coupled at its inner peripheral portion 102X to the sleeve part 28A of the wheel carrier member 28 by the key 36. The intermediate member 102 has a cylindrical outer surface 102A which is aligned with the rotation axis 18 and supports the first pressing member 14 at the cylindrical outer surface 102A so that the first pressing member 14 can relatively rotate and can relatively displace along the rotation axis 18. In addition, the intermediate member 102 is spaced apart from the second pressing member 16 in the direction along the rotation axis 18.

As shown in Figs. 13 and 14, the intermediate member 102 has a annular plate part 102Y in the area radially outer than the cylindrical outer surface 102A. The annular plate part 102Y is provided with sixteen arcuate holes 104 which are equally spaced apart circumferentially by partition walls 104A. Each arcuate hole 104 extends along the rotation axis 18 penetrating through the annular plate part 102Y and extends arcuately around the rotation axis 18. The radially inner surface and the radially outer surface of each arcuate hole 104 are cylindrical extending along the rotation axis 18.

In each arcuate hole 104, the first wedge members 96 is positioned adjacently to the first pressing member 14 and the second wedge members 98 is positioned adjacently to the second pressing member 16. The wedge members 96 and 98 extend arcuately around the rotation axis 18 and fit into the associated arcuate hole 104. The circumferential length of the wedge members 96 and 98 are shorter than that of the arcuate holes 104. The radius of the cylindrical outer surface of each wedge member is slightly smaller than that of the cylindrical inner surface of the associated arcuate hole 104 and the radius of the cylindrical inner surface of each wedge member is slightly larger than that of the cylindrical outer surface of each arcuate hole 104.

The wedge members 96 and 98 project along the rotation axis 18 from the intermediate member 102 toward the first and second pressing members 14 and 16, respectively. The tip ends of the wedge members 96 and 98 are slightly tapered and is fitted into recesses 14G and 16G that are formed in the first and second pressing members 14 and 16, respectively, and extend circumferentially. The recesses 14G and 16G have the sizes and the shapes which can accommodate the tip ends of the wedge members 96 and 98 with a little clearance.

The recesses 14G and 16G are provided with stopper portions 14GS and 16GS, respectively, having a small projection height at the circumferential positions corresponding to the associated partition walls 104A. The stopper portions 14GS and 16GS divide the recesses 14G and 16G, respectively, into a plurality of circumferential areas. It is to be noted that the recesses 14G and 16G have the depth which prevents the tip ends of the wedge members 96 and 98 from slipping off from the associated recesses 14G and 16G even when the wedge members 96 and 98 displace along the rotation axis 18 relative to the first and second pressing members 14 and 16, respectively.

Thus, the wedge members 96 and 98 can rotate around the rotation axis 18 relative to the intermediate member 102, but cannot rotate around the rotation axis 18 relative to the first and second pressing members 14 and 16, respectively. Besides, the wedge members 96 and 98 can linearly displace along the rotation axis 18 relative to the intermediate member 102 and can linearly displace along the rotation axis 18 relative to the first and second pressing members 14 and 16, respectively.

It is to be noted that during non-braking operation of the brake device where the solenoid 34 is not supplied with a control electric current, the wedge members 96 and 98 are positioned at the normal positions shown in Fig. 14, and are not pressed against the first and second pressing members 14 and 16, respectively. Thus, the first and second pressing members 14 and 16 do not frictionally engage with the disk part 20A and the sub-rotor 22, respectively.

As is understood from the above, in the fifth embodiment, the wedge members 96 and 98 cooperate with the arcuate holes 104 and the partition walls 104A therebetween to define a force transmitting mechanism 106 which functions similarly to the force transmitting mechanism 100 in the fourth embodiment. Accordingly, as in the fourth embodiment, the pressing force of the first and second pressing members 14 and 16 acting against the disk part 20A and the sub-rotor 22 is increased. Notably, the fifth embodiment is structured in other aspects similarly to the above-described first to fourth embodiments.

For example, in a situation where, as shown by an arrow of a bold solid line in Fig. 14, the disk part 20A and the sub-rotor 22 are moved leftward as viewed in Fig. 14, when the solenoid 34 is supplied with the control electric current, the first pressing member 14 is pressed against the disk part 20A. As the first frictional engagement portion 14A of the first pressing member 14 frictionally engages with the disk part 20A, the first pressing member 14 is moved leftward. In consequence, the first wedge members 96 located on the right side of the partition walls 104A as spaced apart therefrom are as well moved leftward and transmit rotational torque to the associated second wedge members 98.

However, as the partition walls 104A are parts of the intermediate member 102 that cannot rotate around the rotation axis 18, the wedge member 98 which is located on the right side of the partition walls 104A as in contact therewith cannot freely move leftward as viewed in Fig. 14. As a result, a part of the rotational torque transformed into the force for pressing the second wedge member 98 against the second pressing member 16 and the sub-rotor 22 by means of the wedge action generated by the cooperation of the side surfaces 96B and 98B, which makes the second frictional engagement portion 16A of the second pressing member 16 frictionally engage with the sub-rotor 22. Thus, braking force is generated by the frictional engagement between the first frictional engagement portion 14A and the disk part 20A and the frictional engagement between the second frictional engagement portion 16A and the sub-rotor 22.

The reaction force which is generated by means of the first wedge members 96 pressing the disk part 20A by way of the first pressing member 14 is transmitted to the wedge member 98. Similarly, the reaction force which is generated by means of the second wedge member 98 pressing the sub-rotor 22 by way of the second pressing member 16 is transmitted to the wedge members 96. Therefore, as in the first to fourth embodiments, pressing force can be enhanced by effectively utilizing the reaction force and no special member is required to bear the reaction force.

Incidentlly, although the first wedge members 96 disposed on the left side of the partition walls 104A as spaced apart therefrom as well receive the force trying to move them leftward, the partition walls 104A prevent the first wedge members from moving leftward. In consequence, the first wedge members 96 cannot transmit any rotational torque to the second wedge member 98 and cannot generate any force pressing the second wedge member 98 against the second pressing member 16 and the sub-rotor 22.

Notably, in a situation where, as shown by an arrow of a broken line in Fig. 14, the disk part 20A and the sub-rotor 22 are moved rightward as viewed in Fig. 14, the same operation as above can occur. That is, except that the directions are reversed, the wedge members 96 and 98 disposed on the left side of the partition walls 104A function similarly to the wedge members 96 and 98 disposed on the right side of the partition walls 104A in a situation where the disk part 20A and the sub-rotor 22 are moved leftward as viewed in Fig. 14.

As is understood from the above, according to the fifth embodiment, as in the other embodiments described above, higher braking torque can be generated than in the brake device described in the above-mentioned Laid Open Publication.

As in the fourth embodiment, a plurality of wedge members 96 and 98 are arranged as spaced apart from each other circumferentially and the areas where the wedge members 96 and 98 conduct pressing are radially spaced apart from each other circumferentially. In the fifth embodiment, however, the wedge members 96 and 98 do not frictionally engage directly with the disk part 20A and the sub-rotor 22, respectively, but press the first and second pressing members 14 and 16 against the disk part 20A and the sub-rotor 22, respectively.

Accordingly, as in the first and third embodiments, the first and second pressing members 14 and 16 always frictionally engage with the disk part 20A and the sub-rotor 22 around the rotation axis 18 over the entire circumference. Therefore, as in the first and third embodiments, the risks of abnormal abrasion of the frictional engagement portions, brake vibration, brake squeal and the likes can effectively be reduced.

In particular, according to the fifth embodiment, although the intermediate member 102 is necessary, a plurality of arcuate holes do not need to be formed by the first and second pressing members 14 and 16. Consequently, as compared to the above-described fourth embodiment, the structure of the brake device can be simplified and assembly of the bake device can be easily conducted.

In the illustrated embodiment, both the first pressing member 14 and the intermediate member 102 are securely coupled to the sleeve part 28A of the wheel carrier member 28. However, in the configuration in which the stopper portions 16GS are provided and the circumferential rotation of the second wedge members 98 are limited by the stopper portions, one of the first pressing member 14 and the intermediate member 102 may be rotatable around the rotation axis 18. In the configuration in which the first pressing member 14 and the intermediate member 102 are not rotatable around the rotation axis 18, the stopper portions 16GS may be omitted.

As is understood from the above, in the first, third and fifth embodiments, the frictional engagement portions 14A and 16A extend around the rotation axis 18 over the entire circumference at the same radius positions having the centers on the rotation axis 18, and in the second embodiment, the axes 52 and 58 are positioned at the same radius positions having the centers on the rotation axis 18 and are aligned with each other as much as possible. In consequence, the reaction force generated by means of the frictional engagement portions and the frictional engagement members 54 and 60 being pressed by one of the pressing members 14 and 16 can effectively be transmitted to the other pressing member.

According to the embodiments other than the third embodiment, the disk part 20A and the sub-rotor 22 cooperate with the rotating shaft 17, the wheel carrier member 28 and the seal member 42 to define the closed space 44, and the pressing members 14 and 16 and the like are accommodated in the closed space 44. Consequently, a risk can be reduced that muddy water and dust may enter into the brake device 10, which enables to enhance the durability of the brake device 10. The necessity of a cover or the like for restraining muddy water and dust from entering into the brake device 10 can be eliminated.

According to the embodiments other than the third embodiment, the closed space is filled with a lubricant. Accordingly, the engagement areas around the balls38 and the frictional contact areas can be lubricated by the lubricant. Therefore, the force transmitting mechanisms 46, 100 and 106 can smoothly operate and the pressing by the pressing members 14 and 16 on the frictional engagement portions 14A and the likes can preferably be executed. Abnormal abrasion of the members at the frictional contact areas can be restrained from occurring; heat generation and brake squeal by friction can be restrained from occurring; and the temperature rising of the members can be refrained from occurring by means of the pressing members and the like being cooled by the lubricant.

According to the above-described embodiments, the disk part 20A, the cylindrical part 20B and the sub-rotor 22 form a staple-like sectional shape which opens radially inwardly in a radial section passing through the rotation axis 18. The pressing members 14 and 16 and the like are positioned between the disk part 20A and the sub-rotor 22, and are adapted to press the pressing members 14 and 16 and the like against the disk part and the sub-rotor in the direction of separating them from each other.

Consequently, a caliper is not required which extends to bridge between the opposite sides of the brake rotor, supports the friction members and the pressing devices and bears the reaction force of the pressing force by the pressing devices as in a conventional disk type brake device. No enhancement of the caliper in rigidity is required. Since the disk part 20A and the sub-rotor 22 extend around the rotation axis 18 over the entire circumference, the brake rotor 12 can be enhanced in rigidity in comparison with a caliper which extends only in an arc shape around the rotation axis.

According to the above-described embodiments, the thickness of the cylindrical part 20B is smaller than those of the disk part 20A and the sub-rotor 22. However, the cylindrical part 20B extends cylindrically around the rotation axis 18 over the entire circumference and it has a rigidity higher than those of the disk part 20A and the sub-rotor 22.

In consequence, as compared to where the cylindrical part 20B has a rigidity lower than those of the disk part 20A and the sub-rotor 22, it is possible to reduce the deformation amount by which the disk part 20A and the sub-rotor 22 deform in the direction of separating them from each other during the operation of the brake device 10. Therefore, as compared to where the magnitude relation of the rigidities is reversed, the braking action of the brake device 10 can be enhanced.

According to the above-described embodiments, the cylindrical part 20B is integral with the disk part 20A, and the cylindrical part 20B and the disk part 20A form the main rotor 20 to which a rim part of a vehicle wheel is coupled. Consequently, as compared to where the cylindrical part 20B is a part of the sub-rotor 22 and the cylindrical part 20B is coupled to a main rotor 20 having a substantially disk shape, it is possible to enhance the rigidity of the brake rotor 12 and to enhance the attachment strength of the brake device 10 coupled to a rim part of a vehicle wheel.

In the above-described embodiments, the first pressing member 14 is rotatable around the rotation axis 18 and the second pressing member 16 is not rotatable around the rotation axis 18. The brake device according to the present invention, however, may be a brake device in which the first and second pressing members are rotatable around the rotation axis 18 and the rotations of the first and second pressing members are precluded from exceeding a prescribed value and the structures are not limited to those of the above-described embodiments.

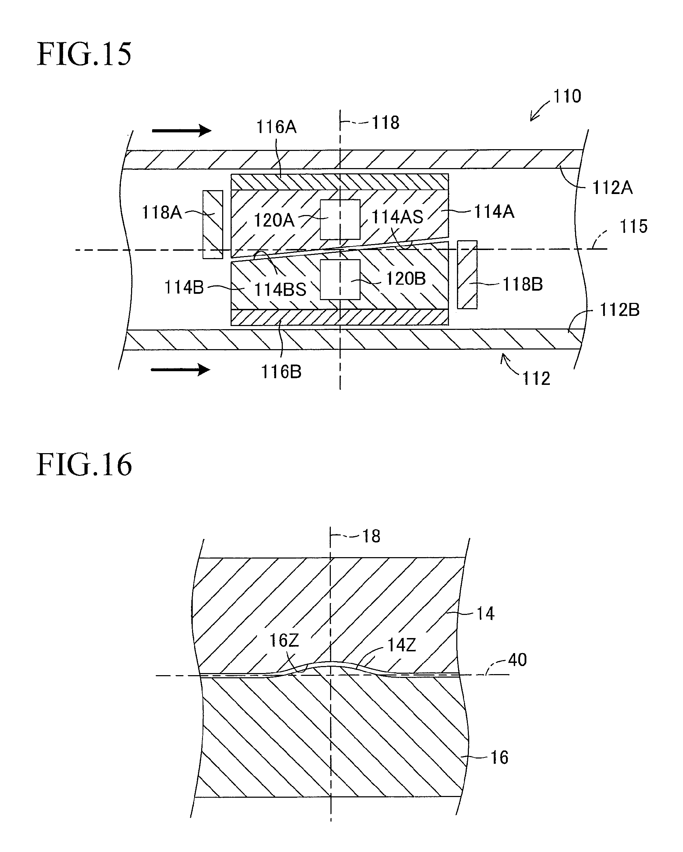

For example, Fig. 15 is an explanatory view of the principal portions of the brake device as viewed in a radial direction showing the principle of increasing the pressing force in the brake device according to the present invention. In Fig.15, 110 and 112 denote a brake device and a brake rotor, respectively, which rotate around a rotation axis 118 as shown by an arrow. The brake rotor 112 has a first disk 112A and a second disk 112B spaced apart from each other along the rotation axis 118. A first pressing member 114A and a second pressing member 114B are disposed between the disks 112A and 112B.

A first frictional engagement member 116A is disposed between the first disk 112A and the first pressing member 114A and is supported by the first pressing member 114A. Similarly, a second frictional engagement member 116B is disposed between the second disk 112B and the second pressing member 114B and is supported by the second pressing member 114B. The first and second pressing members 114A and 114B are spaced apart from each other along the rotation axis 118, and have inclined surfaces 114AS and 114BS, which are inclined in the same direction relative to a virtual plane 115 perpendicular to the rotation axis 118 and extend in parallel to each other. Notably, the inclined surfaces 114AS and 114BS may contact with each other even during non- braking operation.

A first stationary member 118A and a second stationary member 118B are disposed at positions which are spaced apart from the first and second pressing members 114A and 114B, respectively, in a rotation direction around the rotation axis 118. Notably, the stationary members 118A and 118B may contact with the first and second pressing members 114A and 114B, respectively, during non- braking operation. In addition, a first energizing unit 120A and a second energizing unit 120B are provided in the first and second pressing members 114A and 114B, respectively. During braking operation, one of the first and second energizing units 120A and 120B energize the associated first or second pressing member 114A or 114B against the associated first disk 112A or second disk 112B, respectively.

During non-braking operation, the first and second energizing units 120A and 120B are not actuated. The first and second frictional engagement members 116A and 116B do not contact with the first disk 112A and second disk 112B, respectively, and, accordingly, the brake device 110 does not generate any braking force by the frictional force therebetween. The first and second pressing members 114A and 114B do not afford and receive any rotational torque acting around the rotation axis 118 and do not afford and receive any force acting along the rotation axis 118.

In contrast, during braking operation, one of the energizing units 120A and 120B are actuated. For example, when the energizing unit 120A is actuated, the first pressing member 114A is energized toward the first disk 112A and the frictional engagement member 116A is pressed against the disk 112A by the pressing member 114A. When the frictional engagement member 116A frictionally engages with the disk 112A, rotational torque generated by the frictional force between them acts on the frictional engagement member 116A and the pressing member 114A,which displaces the pressing member 114A rightward as viewed in Fig. 15 to engage with the pressing member 114B. As a result, the pressing member 114A drive the pressing member 114B in the direction in which the rotational torque acts, and the pressing member 114B contacts with the stationary member 118B. The pressing members 114A and 114B are prevented from rotating further by the stationary member 118B so that the frictional force between the frictional engagement member 116A and the disk 112A generates a braking force.

The rotational torque is dissolved into force acting around the rotation axis 118 and a force acting along the rotation axis 118 by the wedge action generated by the engagement of the inclined surfaces 114AS and 114BS. As the force acting along the rotation axis 118 acts in the direction separating the pressing members 114A and 114B from each other, the pressing member 114B presses the frictional engagement member 116B against the disk 112B to engage them with each other. Accordingly, the frictional force between the frictional engagement member 116B and the disk 112B also generates braking force. Thus, the pressing members 114A, 114B and the stationary members 118A, 118B cooperate with each other to function as a force transmission mechanism.

Incidentally, when the brake rotor 112 is rotated in the direction opposite to that shown by the arrow, the energizing unit 120B is actuated. The first pressing member 114B is energized toward the first disk 112B and the frictional engagement member 116B is pressed against the disk 112B. In other words, an energizing unit to be actuated is determined in accordance with the rotational direction of the brake rotor 112 so that rotational torque which one of the pressing members receives when the frictional engagement member frictionally engage with the disk is transmitted to the other pressing member.

It is to be understood that as in the above-described first to third embodiments, in a configuration where the inclined surfaces 114AS and 114BS have portions inclined in the opposite direction relative to the virtual plane 115, either of the energizing units may be actuated regardless of the rotational direction of the brake rotor 112. In that case, stationary members corresponding to the stationary members 118A and 118B are provided on circumferentially both sides of the pressing member 114A or 114B which is actuated.

While the present invention has been described with reference to the above embodiments, it will be apparent to those skilled in the art that the present invention is not limited thereto, but may be embodied in various other forms without departing from the scope of the invention.

For example, in the above-described first to third embodiments, the cam surfaces 14Z and 16Z of the force transmission mechanism 46 have the curved sections 14ZA and 16ZA and the inclined sections 14ZB, 16ZB, 14ZC and 16ZC which extend on the both sides of the curved sections. However, the cam surfaces 14Z and 16Z of the force transmission mechanism 46 may have another shape so long as it has a pair of surfaces inclined in the same direction relative to the virtual plane 40 perpendicular to the rotation axis 118.

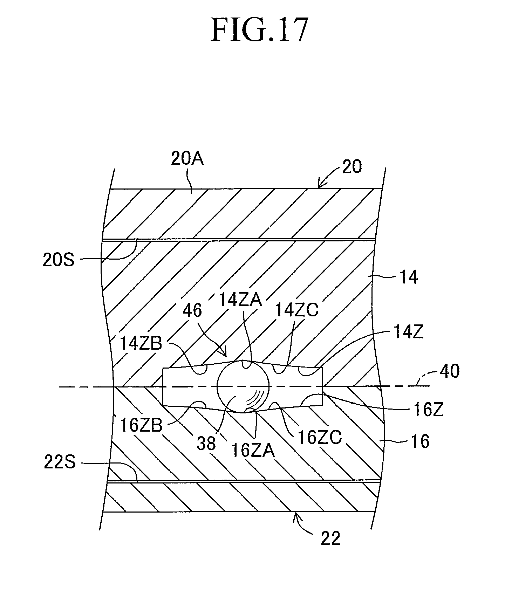

As shown in Fig. 16, for example, the cam surface 14Z may have a mountain shape and the cam surface 16Z may have a volley shape accommodating the cam surface 14Z. In this modification, rolling elements such as balls may be interposed between the cam surfaces of the first and second pressing members. In addition, as shown in Fig. 17, the inclined sections 14ZB, 16ZB, 14ZC and 16ZC which extend on the both sides of the curved sections may be curved so that their inclination relative to the virtual plane 40 gradually decreases with the distances from the associated curved sections. Similarly, in the fourth and the fifth embodiments, the side surfaces of the wedge members 96 and 98 may be curved so that their inclination relative to the virtual plane 40 gradually decreases with the distances from the top bases to the bottom bases of the trapezoids.

In the configuration where, as in the first to third embodiments, rolling elements such as balls 38 are interposed between the cam surfaces of the first and second pressing members, the inclined sections of only one of the cam surfaces may be curved so that their inclination relative to the virtual plane 40 gradually decreases with the distances from the associated curved sections. Incidentally, rolling elements may be column rollers or tapered rollers.

According to these modifications, the component of the force which is derived by dissolving a rotational torque in the direction along the rotation axis 18 can gradually be increased as the relative displacements of the first and second pressing members 14 and 16 or the wedge members 96 and 98. As a result, a braking property of the brake device can be made progressive.

While in the above-described first to third embodiments, the cam surfaces 14Z and 16Z have the curved sections 14ZA and 16ZA, respectively, they may consist of only the inclined sections 14ZB, 16ZB, 14ZC and 16ZC. In that configuration, the areas where the inclination relative to the virtual plane 40 is 0 are the positions where the inclined sections 14ZB and 14ZC, and 16ZB and 16ZC intersect, respectively.

In the above-described embodiments other than the second embodiment, the first and second frictional engagement members are integrally formed with the first and second pressing members 14 and 16 or the wedge members 96 and 98 as the frictional engagement portions 14A and 16A. In these embodiments, however, at least one of the first and second frictional engagement members may be a member separate from the pressing member or the wedge member.

In the above-described first and third embodiments, the frictional engagement portions 14A and 16A have the same size and in the second embodiment, the first and second frictional engagement members 54 and 60 have the same diameter. However, these may have different sizes and diameters.

In the above-described second embodiment, the frictional portions formed on both sides of the first and second frictional engagement members 54 and 60 are provided at the same radial position to each other from the rotation axes 54 and 58 as centers. However, the frictional portions formed on both sides of the frictional engagement members 54 and 60 may be provided at different radial positions from each other.

In the above-described embodiments, the cylindrical part 20B is integrally formed with the disk part 20A so as to form the main rotor 20. However, the cylindrical part 20B may integrally be formed with the sub-rotor 22 and, alternatively, the disk part 20A, the disk part 20A and the sub-rotor 22 may be separate members.

While in the above-described embodiments other than the third embodiment, the main rotor 20 and the sub-rotor 22 cooperate with the rotating shaft 17, the wheel carrier member 28 and the seal member 42 to define a closed space 44, they may not define a closed space.

Notably, in the above-described embodiments other than the third embodiment, the first pressing member 14, the second pressing member 16 and frictional engagement members are accommodated in the closed space 44. Accordingly, as compared to where the pressing members and the likes are not accommodated in the closed space, the members are liable to increase in temperature during the operation of the brake device 10. However, if the frictional engagement members are made from a ceramic base frictional material, a decrease in the braking force due to the temperature rise is small. In a configuration where the pressing members and the likes are accommodated in a closed space, the main rotor 20 and the sub-rotor 22 may be provided with cooling fins so that the members be restrained from increasing in temperature.

While in the above-described embodiments other than the third embodiment, the first pressing member 14 is energized toward the disk part 20A by the electromagnetic force of the solenoid 34. However, the means for energizing a pressing member may be a hydraulic means which is similar to that in the third embodiment, for example. In addition, while in the above-described embodiments, the brake device is one for a vehicle, the brake device according to the present invention may be applied to any application other than a vehicle.

## Claims

1. A friction brake device comprising:
first and second mutually opposed friction surfaces which are rotatable around a rotation axis and extend perpendicularly to said rotation axis;
first and second pressing members which press first and second frictional engagement members against said first and second friction surfaces, respectively, and are supported so that said pressing members can rotate around said rotation axis and can relatively displace along said rotation axis;
a force transmission mechanism which transmits rotational torque acting around said rotation axis between said first and second pressing members; transforms said rotational torque into the force acting in the direction of separating said first and second pressing members from each other along said rotation axis through the use of a wedge action generated by means of said first and second pressing members being relatively rotated around said rotation axis; and mutually transmits reaction force generated by means of said friction surfaces being pressed by said frictional engagement members between said first and second pressing members;
a pressing force control mechanism which control the force with which at least one of said first and second pressing members presses said associated frictional engagement member against said associated friction surface; and
a rotational torque bearing member which is supported so as not to rotate around said rotation axis and bears the rotational torque which is transmitted from one of said first and second pressing members to the other of said first and second pressing members by way of said other pressing member.

2. The friction brake device according to claim 1, wherein when the force which is controlled by said pressing force control mechanism is 0, said first and second pressing members are positioned at normal positions where they do not press said first and second frictional engagement members against said first and second friction surfaces, respectively, and said force transmission mechanism does not generate any force which acts in the direction of separating said first and second pressing members from each other.

3. The friction brake device according to claim 2, wherein as the relative rotational displacement of said first and second pressing members from said normal positions increases, said force transmission mechanism increases the force which acts in the direction of separating said first and second pressing members from each other.

4. The friction brake device according to claim 1, wherein
said force transmission mechanism has first and second opposed surfaces which are provided on said first and second pressing members, respectively, and opposes to each other in the direction along said rotation axis;
said first and second opposed surfaces have inclined areas which incline in the same direction relative to a virtual plane perpendicular to said rotation axis; and
said force transmission mechanism transmits the rotational torque in the circumferential direction around said rotation axis by the cooperation of said inclined areas of said first and second opposed surfaces, and transforms the rotational torque into the force acting in the direction which is parallel to said rotation axis and separating said first and second pressing members from each other.

5. The friction brake device according to claim 4, wherein when said first and second pressing members are positioned at said normal positions, the distance along said rotation axis between the surface of said first pressing member on the side of said first frictional engagement member and the surface of said second pressing member on the side of said second frictional engagement member assumes a minimum value.

6. The friction brake device according to claim 4 or 5, wherein said first and second opposed surfaces have areas where the inclination relative to said virtual plane is 0, and said first and second opposed surfaces on both sides of said areas where the inclination relative to said virtual plane is 0 are inclined in the directions opposite to each other relative to said virtual plane.

7. The friction brake device according to claim 5, wherein the inclination of said inclined area of at least one of said first and second opposed surfaces relative to said virtual plane decreases with the distances from said associated area where the inclination relative to said virtual plane is 0.

8. The friction brake device according to any one of claims 1 to 7, wherein said first pressing member is supported by a stationary member so that it can rotate around said rotation axis and can displace along said rotation axis; said second pressing member is supported by said stationary member so that it cannot rotate around said rotation axis but can displace along said rotation axis; and said pressing force control mechanism controls the force with which at least said first pressing member presses said first frictional engagement member against said first friction surface.

9. The friction brake device according to claim 1, wherein
said first and second pressing members includes first and second wedge members having said first and second opposed surfaces, respectively, which opposes to each other in the direction along said rotation axis, and first and second main bodies which support said first and second wedge members, respectively, so that they can displace along said rotation axis;
said first and second opposed surfaces have inclined areas which incline in the same direction relative to a virtual plane perpendicular to said rotation axis;
said force transmission mechanism transmits the rotational torque in the circumferential direction around said rotation axis by the cooperation of said inclined areas of said first and second opposed surfaces, and transforms the rotational torque into the force acting in the direction which is parallel to said rotation axis and separating said first and second pressing members from each other; and
said first and second wedge members press said first and second frictional engagement members against said first and second friction surfaces, respectively.

10. The friction brake device according to claim 9, wherein said first main body is supported by a stationary member so that it can rotate around said rotation axis and can displace along said rotation axis; said second main body is supported by said stationary member so that it cannot rotate around said rotation axis but can displace along said rotation axis; and said pressing force control mechanism controls the force with which at least said first wedge member presses said first frictional engagement member against said first friction surface.

11. The friction brake device according to claim 1, wherein
said force transmission mechanism includes first and second wedge members having said first and second opposed surfaces, respectively, which opposes to each other in the direction along said rotation axis;
said first and second pressing members have portions positioned between said first and second friction surfaces and said first and second wedge members, respectively, and are supported so that they can displace along said rotation axis together with said first and second wedge members, respectively;
said first and second opposed surfaces have inclined areas which incline in the same direction relative to a virtual plane perpendicular to said rotation axis;
said force transmission mechanism transmits the rotational torque in the circumferential direction around said rotation axis by the cooperation of said inclined areas of said first and second opposed surfaces, and transforms the rotational torque into the force acting in the direction which is parallel to said rotation axis and separating said first and second wedge members from each other; and
said first and second wedge members press said first and second frictional engagement members against said first and second friction surfaces by way of said first and second pressing members, respectively.

12. The friction brake device according to claim 1, wherein said first main body is supported by a stationary member so that it can rotate around said rotation axis and can displace along said rotation axis; said second main body is supported by said stationary member so that it can displace along said rotation axis; at least one of said second main body and said second wedge member is supported by said stationary member so that it cannot rotate around said rotation axis; when said first main body is rotated around said rotation axis, said first wedge member is rotationally driven around said rotation axis by said first main body; and said pressing force control mechanism controls the force with which at least said first main body presses said first frictional engagement member against said first friction surface.

13. The friction brake device according to claim 8, 10 or 12, wherein said rotational torque bearing member is said stationary member.

14. The friction brake device according to any one of claims 1 to 13, wherein a plurality of said pressing force control mechanisms are arranged around said rotation as spaced apart from each other.

15. The friction brake device according to any one of claims 9 to 12, wherein a plurality of said first and second wedge members are arranged around said rotation axis as spaced apart from each other, respectively.
